# EUROPÄISCHE PATENTSCHRIFT

(11) **EP 3 430 919 B1**
(45) Veröffentlichungstag und Bekanntmachung des Hinweises auf die Patenterteilung: **26.02.2020**
(21) Anmeldenummer: 17182591.2
(22) Anmeldetag: 21.07.2017
(51) Int. Cl.: A24D 3/06

(54) **FILTERELEMENT FÜR TABAKARTIKEL, WOBEI DAS FILTERELEMENT EINE KAPSEL MIT EINEM FLÜSSIGEN MEDIUM ALS KERNMATERIAL AUFWEIST**
FILTER ELEMENT FOR TOBACCO ARTICLES, WHEREIN THE FILTER ELEMENT COMPRISES A CAPSULE WITH A LIQUID MEDIUM AS CORE MATERIAL
ÉLÉMENT DE FILTRE POUR UN ARTICLE DE TABAC, L'ÉLÉMENT DE FILTRE COMPRENANT AU MOINS UNE CAPSULE POURVUE D'UN MILIEU LIQUIDE EN TANT QUE MATÉRIAU PRINCIPAL

(43) Veröffentlichungstag der Anmeldung: 23.01.2019
(73) Patentinhaber: Reemtsma Cigarettenfabriken GmbH, 22761 Hamburg (DE)
(72) Erfinder: Rieth, Fabian, 22761 Hamburg (DE)
(74) Vertreter: Gulde & Partner

(56) Entgegenhaltungen:
- EP-A1- 2 997 837
- WO-A2-2007/083245
- WO-A2-2008/146169
- Evonik Industries: "Eudragit", , 1. Dezember 2015 (2015-12-01), XP055288214, Gefunden im Internet: URL:http://eudragit.evonik.com/sites/lists /HN/Documents/evonik-brochure-eudragit-EN. pdf [gefunden am 2016-07-13]

## Beschreibung

Tabakartikel, wie beispielsweise Zigaretten, mit einem Filterelement, welches eine brechbare Kapsel enthält, sind im Stand der Technik bekannt. So werden beispielsweise in US 2004/0261807 und WO 2006/0136197 exemplarische Ausführungsformen solcher Tabakartikel und Filterelemente beschrieben. WO2008/146159 offenbart Kapseln die eine Polyacrylat-, Polymethacrylathülle aufweisen und eine liquide Füllung haben. Die Kapseln werden in Zigarettenfiltern eingesetzt. Die Kapseln sind 100nm-50µm groß, und die Wanddicke beträgt 20nm-3µm. Die Kapseln werden durch Extrudieren hergestellt.

In der Regel dienen die in den Kapseln enthaltenen Stoffe der Aromatisierung bzw. der Beeinflussung des Inhalts bevor der Konsument dieses aufnimmt oder der Beeinflussung des Rauchwiderstands ("resistance to draw" oder RTD). Neben dem Anreichern des zu inhalierenden Gasstroms mit Aroma- oder Geschmacksstoffen kann dabei beispielsweise auch das Binden oder Entfernen von Bei- oder Schadstoffen aus dem zu inhalierenden Gasstrom beabsichtigt sein. Dabei werden die Inhaltsstoffe der Kapseln bevorzugt erst kurz vor dem Gebrauch des Tabakartikels durch Zerbrechen der Kapsel im Filterelement freigesetzt. Eine Aufgabe der verwendeten Kapseln besteht also darin, die Inhaltsstoffe vor einem unerwünschten Austritt zu schützen und erst durch das Brechen der Kapsel freizusetzen. Eine Herausforderung der bislang bekannten Kapseln ist somit die Lagerfähigkeit von Kapseln oder Tabakartikeln enthaltend solche Kapseln, insbesondere die Lagerfähigkeit von Kapseln, die hydrophile Medien enthalten, wie beispielsweise wässrige Lösungen.

Die vorliegende Erfindung betrifft ein Filterelement für die Verwendung in einem Tabakartikel gemäß einem der Patentansprüche, sowie einen Tabakartikel enthaltend ein solches Filterelement.

Im Sinne der vorliegenden Erfindung umfasst der Begriff Filterelement eine Anordnung, die geeignet ist, einem Aerosol oder zu inhalierendem Gasstrom einen oder mehrere Inhaltsstoffe zu entziehen oder dessen Konzentration zu beeinflussen, insbesondere dessen Konzentration im zu inhalierenden Gasstrom zu senken, oder einen Zugwiderstand beim Inhalieren des Aerosols ("resistance to draw" oder RTD) zu beeinflussen. Dazu weist ein Filterelement mindestens einen Filterkörper auf, der derart angeordnet ist, dass der mindestens eine Filterkörper eine Filterwirkung entfalten kann. In der Regel ist der Filterkörper derart im Filterelement angeordnet, dass der Filterkörper eine Filterwirkung für den zu inhalierenden Gasstrom entfaltet, wobei der zu inhalierende Gasstrom in der Regel von einem tabakhaltigen Element durch das Filterelement zum Verbraucher hin erfolgt.

Das erfindungsgemäße Filterelement umfasst mindestens einen Filterkörper sowie mindestens eine Kapsel mit einem flüssigen Medium als Kernmaterial. Bevorzugt sind der mindestens eine Filterkörper und die mindestens eine Kapsel von einem Hüllmaterial umgeben. Die Umhüllung dient in der Regel dazu, die einzelnen Bestandteile in der gewünschten Anordnung zueinander zu halten und eine spätere Verbindung mit weiteren Komponenten eines Tabakartikels zu gewährleisten. Als Hüllmaterial wird bevorzugt Papier oder Papier-haltiges Material verwendet oder Pappe bzw. Pappe-haltiges Material. Das Hüllmaterial kann ganz oder Teilweise beschichtet oder ganz oder teilweise mit einer oder mehreren Substanzen oder Wirkstoffen beschichtet eingesetzt werden. In dem Hüllmaterial können eine oder mehrere Öffnungen vorgesehen sein (sog. "ventilation holes"), die eine Beeinflussung des zu inhalierenden Gasstroms durch das Filterelement erlauben.

Die im erfindungsgemäßen Filterelement eingesetzten Filterkörper sind nicht auf bestimmte Typen beschränkt und es können alle Filterkörper zum Einsatz gelangen, die üblicherweise im Bereich von Tabakartikeln eingesetzt und verwendet werden. Geeignete Filterkörper sind dem Fachmann bekannt. Üblicherweise werden Filterkörper aus faserförmigem Material hergestellt, beispielsweise aus Acetat-basierten Materialien wie Celluloseacetaten, z. B. Cellulose-mono-acetat. Das faserförmige Material des Filterkörpers kann teilweise oder ganz unbeschichtet oder mit einer oder mehreren Substanzen und/oder Wirkstoffen beschichtet oder modifiziert sein.

Das erfindungsgemäße Filterelement kann zwei oder mehrere Filterkörper aufweisen, wobei die mindestens eine Kapsel in einem der Filterkörper eingebettet vorliegen kann oder in axialer Strömungsrichtung durch das Filterelement neben (also vor oder hinter) dem mindestens einen Filterkörper oder zwischen zwei benachbarten Filterkörpern angeordnet sein.

Ein oder mehrere Filterkörper des erfindungsgemäßen Filterelements können einen oder mehrere hohle Aussparungen (sog. "hollow bores") aufweisen. Bevorzugt sind diese hohlen Aussparungen in axialer Strömungsrichtung des zu inhalierenden Gasstroms durch das Filterelement ausgerichtet, so dass der Zugwiderstand im Mittel über den gesamten Querschnitt des Filterkörpers vermindert wird.

Das erfindungsgemäße Filterelement kann beispielsweise an dem Ende, welches später das Mundende des Filters eines Tabakartikels bilden soll, eine Aussparung aufweisen (als sog. "recess filter" ausgebildet sein). Diese terminale Aussparung kann in einem endständigen Filterkörper vorgesehen sein oder in einem anderen endständigen Bestandteil des erfindungsgemäßen Filterelements.

Neben Filterkörpern und Kapseln kann das erfindungsgemäße Filterelement noch weitere Elemente oder Bestandteile aufweisen, wie z. B. Hohlräume die beispielsweise durch Röhren (z. B. aus Pappe o.ä.) gebildet und stabilisiert werden, oder weitere mechanische Belüftungs- oder Filterelemente sowie weitere Kavitäten oder Inhaltsstoffe.

Das erfindungsgemäße Filterelement kann auch zwei oder mehrere Kapseln umfassen, wobei jede Kapsel für sich bevorzugt entweder in einem Filterkörper eingebettet vorliegt oder vor, hinter oder zwischen den Filterkörpern des Filterelements, wobei auch mehrere Kapseln in einem oder mehreren Filterkörpern eingebettet vorliegen können oder vor, hinter oder zwischen den Filterkörpern des Filterelements angeordnet sein können.

Das erfindungsgemäße Filterelement ist geeignet um in einem Tabakartikel verwendet zu werden. Unter einem Tabakartikel wird erfindungsgemäß eine Anordnung verstanden, die einen Tabak-haltigen Bereich aufweist, wobei der Konsument in der Regel ein Aerosol aus dem Tabak-haltigen Bereich inhaliert. Bevorzugt weist der erfindungsgemäße Tabakartikel neben einem erfindungsgemäßen Filterelement ein Tabak-haltiges, stabförmiges Element auf, welches derart mit dem Filterelement verbunden vorliegt, dass ein Aerosol oder ein zu inhalierender Gasstrom von dem Tabak-haltigen, stabförmigen Element durch das erfindungsgemäße Filterelement an den Konsumenten übergeleitet werden kann. Dem Fachmann sind geeignete Tabakartikel bekannt, wie beispielsweise Zigaretten oder Tabak-haltige Artikel für den Gebrauch in einer sog. "heat-not-burn"-Vorrichtung (HnB-Vorrichtung), bei der das Tabak-haltige Material nicht verbrannt wird sondern durch Erhitzen auf eine Temperatur, die 350°C nicht überschreitet, ein Aerosol gebildet wird, welches der Konsument dann inhalieren kann. Geeignete Tabakartikel und HnB-Vorrichtungen sind dem Fachmann bekannt.

Insbesondere betrifft die Erfindung ein Filterelement für die Verwendung in einem Tabakartikel, wobei das Filterelement mindestens einen Filterkörper und mindestens eine Kapsel mit einem flüssigen Medium als Kernmaterial aufweist, dadurch gekennzeichnet, dass die mindestens eine Kapsel eine wasserdampfundurchlässige Hülle aus einem polymeren Material aufweist, welches aus einem UV-polymerisierbaren Vorläufermaterial erhalten wurde, wobei das UV-polymerisierbare Vorläufermaterial mindestens eine Verbindung mit zwei jeweils endständigen Diacrylat- und/oder Dimethacrylatgruppen ist, die durch eine starre, unpolare, nicht-vernetzende Gruppe verbunden sind, wobei die Kapseln eine mittlere Teilchengröße von 0,1 bis 10 mm aufweisen, bevorzugt 1 bis 5 mm, und eine mittlere Wanddicke von 10 µm bis 2 mm, bevorzugt 50 µm bis 200 µm.

Im erfindungsgemäßen Filterelement weist die mindestens eine Kapsel bevorzugt eine WVTR (Wasserdampftransmissionsrate; gemessen bei 23°C und einer relativen Luftfeuchtigkeit von 80%) auf von 0,005 bis 50 g/m²d, insbesondere 0,1 bis 10 g/m²d.

Insbesondere kann das erfindungsgemäße Filterelement derart ausgestaltet sein, dass das flüssige Medium des Kernmaterials durch mechanische Beanspruchung freisetzbar ist.

Im erfindungsgemäßen Filterelement kann die starre Gruppe des UV-polymerisierbare Vorläufermaterials mindestens eine Verbindung umfassen oder davon abgeleitet sein, die aus der Gruppe ausgewählt ist, bestehend aus:
a. aliphatischen bicyclischen oder tricyclischen Ringdiolsystemen, welche durch Alkylgruppen mit 1 bis 3 Kohlenstoffatomen substituiert sein können,
b. Bisphenol A oder Derivaten davon, bei denen einer oder beide Phenylreste durch Alkylgruppen mit 1 bis 3 Kohlenstoffatomen substituiert sind, und
c. Diurethanen, welche aus einem verzweigten C₅ bis C₁₀-Alkyldiisocyanat oder C₅ bis C₁₀-Cycloalkyldiisocyanat und Monoethylenglycol gebildet sind.

Besonders bevorzugt ist das UV-polymerisierbare Vorläufermaterial ausgewählt aus Bisphenol-A-Diacrylat, Bisphenol-A-Dimethacrylat, Tricyclodecandimethanoldiacrylat, Tricyclodecandimethanoldimethacrylat und/oder Urethandimethacrylat (UDMA) der folgenden Formel, wobei es sich in der Regel um ein Isomerengemisch handelt:

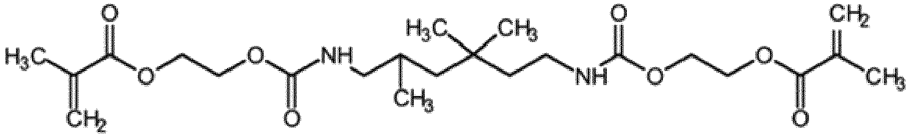

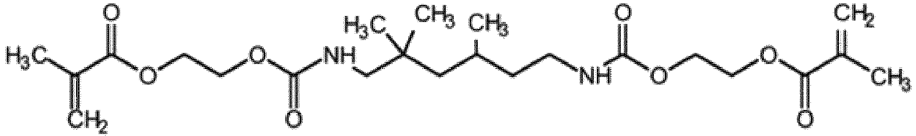

Im erfindungsgemäßen Filterelement wird bevorzugt ein UV-polymerisierbares Vorläufermaterial verwendet, dessen Viskosität des 0,001 bis 50 Pa·s, besonders bevorzugt 0,1 bis 10 Pa·s, beträgt.

Das im erfindungsgemäßen Filterelement verwendete UV-polymerisierbare Vorläufermaterial kann sich insbesondere dadurch auszeichnen, dass es kein Lösungsmittel und keine bei Raumtemperatur und Atmosphärendruck leicht flüchtigen Substanzen enthält.

Bei dem als Kernmaterial der mindestens einen Kapsel flüssigen Medium kann es sich beispielsweise um ein hydrophiles flüssiges Medium handeln, bevorzugt um eine wässrige Lösung oder Dispersion, ganz besonders bevorzugt um Wasser.

Insbesondere kann im erfindungsgemäßen Filterelement eine Kapsel verwendet werden, die herstellbar ist durch ein Verfahren mit den Schritten:
- Co-extrudieren des Kernmaterials und einer Zusammensetzung, welche ein UV-polymerisierbares Vorläufermaterial der Hülle und einen Radikalstarter enthält, derart, dass das UV-polymerisierbare Vorläufermaterial Tröpfchen des Wasser enthaltenden Kernmaterials umgibt, um ein co-extrudiertes Material zu erhalten, und
- anschließend Führen des co-extrudierten Materials durch eine Härtungszone, bei der es sich um einen mit Luft, einem anderen Gas, oder insbesondere Inertgas, gefüllten Bereich handelt, worin eine Polymerisation und Vernetzung des Vorläufermaterials der Hülle durch aktinische Strahlung bewirkt wird und die Verweildauer des co-extrudierten Materials in dieser Härtungszone 0,02 bis 0,2 Sekunden beträgt,
wobei das UV-polymerisierbare Vorläufermaterial mindestens eine Verbindung mit zwei jeweils endständigen Diacrylatgruppen und/oder Dimethacrylatgruppen ist, die durch eine starre Gruppe verbunden sind, und
wobei das Kernmaterial ein Mittel zur Erzielung einer Grenzflächenkompatibilität zwischen dem Kernmaterial und der Hülle enthält.

Im Verfahren zur Herstellung der Kapsel des erfindungsgemäßen Filterelements beträgt die Verweildauer des co-extrudierten Materials in der Härtungszone bevorzugt 0,05 bis 0,1 Sekunden.

Im Verfahren zur Herstellung der Kapsel des erfindungsgemäßen Filterelements kann die Intensität der aktinischen Strahlung so gewählt sein, dass der Restmonomeranteil der eingesetzten Monomere nach der Härtung 15 Gew.-% oder kleiner ist, bevorzugt 2 bis 10 Gew.-%, noch bevorzugter 1 bis 5 Gew.-%.

Im Verfahren zur Herstellung der Kapsel des erfindungsgemäßen Filterelements kann optional eine durch aktinische Strahlung induzierte Nachhärtung durchgeführt werden.

In einer bevorzugten Variante des Verfahrens zur Herstellung der Kapsel des erfindungsgemäßen Filterelements wird das grenzflächenaktive Mittel aus nichtionischen Tensiden und Polyalkylenoxiden, insbesondere Polyethylenoxiden mit einer Molmasse von 100.000 bis 3.000.000 Dalton, und Kombinationen davon ausgewählt.

Das flüssige Medium des Kernmaterials der mindestens einen Kapsel des erfindungsgemäßen Filterelements kann beispielsweise Salze, Salzhydrate, Kohlenhydrate, Proteine, Vitamine, Aminosäuren, Nukleinsäuren, Lipide, Medikamente, Verdickungsmittel, Emulgatoren, Tenside, Farbstoffe, Zellmaterial, Aromastoffe, Duftstoffe oder andere Wirkstoffe enthalten.

Die mindestens eine Kapsel des erfindungsgemäßen Filterelements kann zusätzlich zu der wasserdampfundurchlässigen Hülle auf der Außenseite eine oder mehrere weitere Beschichtungen aufweisen, bevorzugt wird die Beschichtung mittels Vakuumverfahren wie Sputtern, Bedampfen oder Plasmaverfahren, oder mittels chemischer oder galvanischer Beschichtung aufgebracht, um beschichtete Kapseln zu erhalten.

Im erfindungsgemäßen Filterelement kann die mindestens eine Kapsel in dem mindestens einen Filterelement eingebettet vorliegen. Die Kapsel kann aber auch neben dem mindestens einen Filterkörper angeordnet sein, beispielsweise in axialer Richtung des Filterelements vor oder hinter dem mindestens einen Filterkörper.

Das erfindungsgemäße Filterelement kann mehr als einen Filterkörper aufweisen. Ist dies der Fall, so kann die mindestens eine Kapsel bevorzugt zwischen zwei benachbarten Filterkörpern angeordnet sein.

In einer bevorzugten Ausführungsform weist das erfindungsgemäße Filterelement mindestens einen Filterkörper auf, der in Längsrichtung eine oder mehrere hohle Aussparungen aufweist.

Damit die mindestens eine Kapsel der erfindungsgemäßen Filterelements von außen beispielsweise durch Zusammendrücken des Filterelements zerbrochen werden kann, ist es vorteilhaft, wenn die mindestens eine Kapsel eine Druckfestigkeit im Bereich von 5 N bis 25 N aufweist.

Im erfindungsgemäßen Filterelement können der mindestens eine Filterkörper und die mindestens eine Kapsel in jeder denkbaren Ausrichtung zueinander angeordnet sein, die zweckmäßig ist für die Verwendung des Filterelements in einem Tabakartikel. Bevorzugt sind der mindestens eine Filterkörper und die mindestens eine Kapsel von einem Hüllmaterial umgeben sind, bevorzugt ist das Hüllmaterial Papier oder Pappe.

Die vorliegende Erfindung bezieht sich auch auf einen Tabakartikel enthaltend ein tabakhaltiges, stabförmiges Element und ein erfindungsgemäßes Filterelement welches in axialer Richtung zu dem tabakhaltigen, stabförmigen Element angeordnet ist.

Die mit der vorliegenden Erfindung vorgestellte Lösung umfasst die Verwendung von Kapseln mit einer wasserdampfundurchlässigen Hülle aus einem polymeren Material, das aus einem UV-polymerisierbaren Vorläufermaterial erhalten wurde, und einem wässrigen Kernmaterial. Die Kapseln ermöglichen ein leichtes Freisetzen des wässrigen Kernmaterials durch mechanische Einwirkung/Beanspruchung, beispielsweise durch Druck- und/oder Scherbelastung.

Es ist dort gelungen, sphärische Kapseln gefüllt mit Wasser, wässrigen Lösungen, Suspensionen, Emulsionen im Millimeter- und Sub-Millimeter-Bereich mit dünnen Acrylat-Schalen herzustellen, die auch bei Lagerung unter Umgebungsbedingungen oder sogar den Bedingungen besonders trockener Luft lange Rückhaltedauern (über Monate und Jahre) gegenüber Wasser- und Wasserdampf haben und nicht austrocknen. Die hohe Qualität der Schalen mit ihren guten Basis-Barriereeigenschaften ermöglicht es darüber hinaus, die Kapseln z. B. durch Vakuum-Verfahren sogar in den Hochbarriere-Bereich weiter zu veredeln.

Erreicht wird dies durch ein Verfahren zur Herstellung von Kapseln mit einem Wasser enthaltenden Kernmaterial und einer wasserdampfundurchlässigen polymerisierten Hülle, mit den Schritten:
- Coextrusion des Kernmaterials und einer Zusammensetzung, welche ein UV-polymerisierbares Vorläufermaterial der Hülle und einen Radikalstarter enthält, derart, dass das UV-polymerisierbare Vorläufermaterial Tröpfchen des Wasser enthaltenden Kernmaterials umgibt, um ein co-extrudiertes Material zu erhalten, und
- anschließend Führen des co-extrudierten Materials durch eine Härtungszone, bei der es sich um einen gasgefüllten Bereich, z. B. Luft- oder mit Inertgas gefüllten Bereich handelt, worin eine Polymerisation und Vernetzung des Vorläufermaterials der Hülle durch aktinische Strahlung bewirkt wird und die Verweildauer des co-extrudierten Materials in dieser Härtungszone 0,02 bis 0,2 Sekunden beträgt,
wobei das UV-polymerisierbare Vorläufermaterial mindestens eine Verbindung mit zwei jeweils endständigen Diacrylatgruppen und/oder Dimethacrylatgruppen ist, die durch eine kurze, starre Gruppe verbunden sind, und
wobei das Kernmaterial ein Mittel zur Erzielung einer Grenzflächenkompatibilität zwischen dem Kernmaterial und der Hülle enthält.

Hergestellt werden die Kapseln demnach mittels eines technologischen Verfahrens, das Mikroextrusion, die Auswahl bestimmter Vorläufermaterialien, eine in der Regel schwingungsinduzierte Tropfengenerierung und UV-Härtung miteinander kombiniert. Überraschend war insbesondere, dass Kapseln mit besonders guten Barriereeigenschaften durch bestimmte Diacrylate und Methacrylate erhalten werden und nicht mit höher funktionalen Bausteinen (Tri-/ Tetraacrylate oder Oligomere), die prinzipiell eine höhere Vernetzungsdichte ermöglichen und damit eigentlich geeigneter erscheinen.

Die Coextrusion erfolgt beispielsweise mittels einer konzentrischen Düsenkombination mit einer Kern- und Ringdüse, die ein möglichst paralleles Auslaufen des Hüllenvorläufermaterials und des Kernmaterials ermöglichen derart, dass das vernetzbare Vorläufermaterial als Außenmantel (z. B. ringförmig) um den Inhaltstoff herum extrudiert wird, das Kernmaterial von dem Vorläufermaterial umschlossen wird und vom Außenmaterial umhüllte Tropfen gebildet werden. Dies gewährleistet die saubere Trennung von Kern (Wasser)- und Schale-Materialien bei vernachlässigbarer Kontamination sowie kontrolliert einstellbarer Schalendicke mit engen Toleranzen im Sinne einer maximalen Kapselungseffizienz. Der Coextrusionsschritt erfolgt bevorzugt in Luft oder allgemein einem Gas, insbesondere einem Inertgas. Unmittelbar oder kurz nach dem Extrusionsschritt und vorzugsweise in relativ großer räumlicher Nähe zur Extrusionsvorrichtung werden die Partikel vorzugsweise mit Hilfe der Schwerkraft durch eine Zone geführt, in der das Vorläufermaterial durch aktinische Strahlung polymerisiert und vernetzt wird. Dabei ist der Abstand zwischen der Extrusionsvorrichtung und der Strahlungszone bevorzugt so zu wählen, dass er zur Abschnürung und Abrundung der Tropfen gerade noch ausreicht. Abhängig von der Düsenaustrittsgeschwindigkeit der Materialien, der damit verbundenen optimalen Abschnürfrequenz und der daraus resultierenden Produktionsgeschwindigkeit beträgt dieser Abstand bevorzugt mindestens 15 cm und maximal 150 cm, typischerweise ca. 20 bis 50 cm. Mit zunehmendem Abstand zwischen Düsen und Strahler nimmt die Geschwindigkeit der Kapseln infolge der Erdbeschleunigung zu, so dass die Verweilzeit in der Strahlungszone bei noch größerem Abstand zur Härtung ggf. nicht mehr ausreicht.

Das dabei entstehende Vernetzungsprodukt umschließt als Kapsel den Inhaltsstoff bzw. das Kernmaterial, der diese Strukturen füllt. Das Coextrusionsverfahren zur Bildung von Kapseln ist an sich bekannt und beispielsweise beschrieben in Chemie Ingenieur Technik 2003, 75, No.11, S. 1741-1745, jedoch ohne die in dieser Erfindung eingesetzte UV-Härtung zur Kapselung wässriger Inhaltstoffe. Entsprechende Geräte zum Coextrudieren und Bilden von Mikrokapseln, die erfindungsgemäß geeignet sind, werden bspw. von der Brace GmbH vertrieben.

Die im erfindungsgemäßen Filterelement verwendeten Kapseln zeichnen sich insbesondere dadurch aus, dass als UV-polymerisierbares Vorläufermaterial für die Hülle mindestens eine Verbindung mit zwei jeweils endständigen Diacrylatgruppen und/oder Dimethacrylatgruppen verwendet wird, die durch eine starre Gruppe verbunden (im Folgenden auch als "Verbindungsgruppe" bezeichnet) sind. Ein Fachmann wird hierunter Gruppen verstehen, die eine geringe laterale und rotatorische Beweglichkeit aufgrund sterischer Gegebenheiten und/oder durch stabilisierende Wasserstoffbrücken aufweist.

Der Ausdruck "(Meth-)Acrylat", und davon abgeleitete Ausdrücke, wie sie vorliegend gebraucht werden, umfassen Methacrylate, Acrylate oder Mischungen von beiden, bzw. sind entsprechend zu verstehen.

Durch Wahl einer geeigneten Verbindungsgruppe wird die Beweglichkeit einer aus dem Vorläufermaterial gebildeten Polymerkette eingeschränkt. Die Starrheit oder Kettensteifheit der Verbindungsgruppe ist durch die räumliche Struktur der Verbindungsgruppe und die chemische Natur der darin vorkommenden Bindungen bestimmt. Da das Hüllmaterial als Wasser- bzw. Wasserdampfbarriere dient, ist bevorzugt eine unpolare Verbindungsgruppe zu wählen. Die Vernetzung und Polymerisation erfolgt im Wesentlichen über die endständigen (Meth)acrylatgruppen. Die Verbindungsgruppe sollte bevorzugt nicht oder nicht wesentlich zur Vernetzung beitragen und enthält daher bevorzugt keine Doppelbindungen. Überdies sind Doppelbindungen bei der UV-Härtung spaltbar und sollten daher innerhalb der Verbindungsgruppe erfindungsgemäß auch deshalb bevorzugt vermieden werden.

Bei den Verbindungsgruppen handelt es sich um Gruppen, die von Verbindungen mit endständigen OH-Gruppen (Diole, Bisphenole) stammen oder abgeleitet sind. Mit "stammen von" oder "abgeleitet von" ist gemeint, dass im Vorläufermaterial an den endständigen OH-Gruppen dieser Verbindungen die Wasserstoffatome durch die Acrylat- oder Methacrylatreste ersetzt sind.

Bevorzugt stammt die starre Gruppe (Verbindungsgruppe) von mindestens einer Verbindung oder ist davon abgeleitet, die aus der Gruppe ausgewählt ist, bestehend aus:
a. aliphatischen bicyclischen oder tricyclischen Ringdiolsystemen, welche durch Alkylgruppen mit 1 bis 3 Kohlenstoffatomen substituiert sein können,
b. Bisphenol A oder Derivaten davon, bei denen einer oder beide Phenylreste durch Alkylgruppen mit 1 bis 3 Kohlenstoffatomen substituiert sind, und
c. Diurethanen, welche aus einem verzweigten C₅ bis C₁₀-Alkyldiisocyanat oder C₅ bis C₁₀-Cycloalkyldiisocyanat und Monoethylenglycol gebildet sind, wobei das Molverhältnis bevorzugt von etwa 1:1,5 bis etwa 1:3 (Alkyldiisocyanat : Ethylenglycol) beträgt.

Die unter a. genannten Verbindungen sind besonders bevorzugt und können aus Diolen von Bicyclen wie Bicycloheptanen (z. B. Bicyclo[3.2.0]heptan), Bicyclooctaen (z. B. Bicyclo[2.2.2]octan), Bicyclononanen (z. B. Bicyclo[3.3.1]nonan oder Bicyclo[4.3.0]nonan), Bicyclodecanen (z. B. Bicyclo[4.4.0]decan), Bicycloundecanen (z. B. Bicyclo[3.3.3]undecan), und dergleichen abgeleitet sein oder verbrückten Bicyclen (also Tricyclen), wie z. B. Diolen von Tricyclodecandimethan.

Die unter a. genannten Verbindungen können unsubstituiert sein oder mit Alkylgruppen mit jeweils 1 bis 3 Kohlenstoffatomen substituiert sein. Als bevorzugte Substituenten kommen Methylgruppen in Frage. Die Anzahl der optionalen Alkylsubstituenten beträgt bevorzugt 1 bis 5, weiter bevorzugt 2 bis 4. In weiteren bevorzugten Ausführungsformen sind keine weiteren Substituenten vorhanden.

Als konkrete und besonders bevorzugte Beispiele für Vorläufermaterialien, die Verbindungen der Kategorie a. entsprechen, seien Tricyclodecandimethanoldiacrylat (TCDDA, genauer Tricyclo[5.2.1.0]decandimethanoldiacrylat) und Tricyclodecandimethanoldimethacrylat (TCDMDA, genauer Tricyclo[5.2.1.0]decandimethanoldimethacrylat) genannt, wobei Tricyclodecandimethanoldiacrylat (TCDDA) ganz besonders bevorzugt ist.

Die unter b. genannten Verbindungen sind insbesondere von Bisphenol A (2,2-Bis-(4-hydroxyphenyl)-propan) abgeleitet oder von Derivaten von Bisphenol A, bei denen einer oder beide Phenylreste durch Alkylgruppen mit 1 bis 3 Kohlenstoffatomen substituiert sind. Als bevorzugte Substituenten kommen Methylgruppen in Frage. Die Gesamtzahl der optionalen Alkylsubstituenten an den Phenylresten beträgt bevorzugt 1 bis 4, weiter bevorzugt 2 bis 3.

In weiteren bevorzugten Ausführungsformen sind keine Substituenten an den aromatischen Ringen vorhanden, d.h. es handelt sich um Bisphenol A. Beispiele für Alkyl-substituierte Derivate sind Bisphenol C (4,4'-(1-Methylethyliden)bis[2-methylphenol]) oder Bisphenol G (4,4'-(1-Methylethyliden)bis[2-(1-methylethyl)phenol]).

Als konkrete und besonders bevorzugte Beispiele für Vorläufermaterialien die Verbindungen der Kategorie b. entsprechen, seien Bisphenol-A-Diacrylat und Bisphenol-A-Dimethacrylat genannt.

Die unter c. genannten Verbindungen sind bevorzugt von Diurethanen abgeleitet, welche aus einem verzweigten C₅ bis C₁₀-Alkyldiisocyanat oder C₅ bis C₁₀-Cycloalkyldiisocyanat und Monoethylenglycol gebildet sind. Dabei beträgt das Molverhältnis bevorzugt von etwa 1:1,5 bis etwa 1:3 (Alkyldiisocyanat : Monoethylenglycol), weiter bevorzugt etwa 1:2.

Bei diesen Verbindungen handelt es sich um Verbindungen mit zwei endständigen Monoethylenglycolgruppen, die jeweils über eine Urethangruppe mit einer zentralen, verzweigten Alkylengruppe verbunden sind. Die verzweigte Alkylengruppe weist bevorzugt 5 bis 10 Kohlenstoffatome auf, weiter bevorzugt 6 bis 9 Kohlenstoffatome. Die Hauptkette der verzweigten Alkylengruppe weist bevorzugt 4 bis 7, weiter bevorzugt 5 oder 6 Kohlenstoffatome auf. Als Verzweigungsgruppe sind insbesondere Methylgruppen bevorzugt. Besonders bevorzugt ist die verzweigte Alkylengruppe eine 2-Methyl-4,4-dimethylhexylengruppe. Auch Cycloalkylgruppen sind erfindungsgemäß geeignet, wobei die Zyklen bevorzugt 5 bis 6, insbesondere 6, Ringkohlenstoffe aufweisen und weiterhin durch Alkylgruppen, insbesondere Methylgruppen, substituiert sein können.

Als konkrete und besonders bevorzugte Beispiele für Vorläufermaterialien die Verbindungen der Kategorie c. entsprechen, seien Urethandimethacrylat (UDMA) der folgenden Formel, wobei es sich in der Regel um ein Isomerengemisch handelt, genannt, oder das entsprechende Urethandiacrylat:

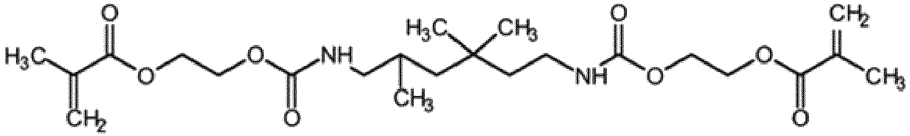

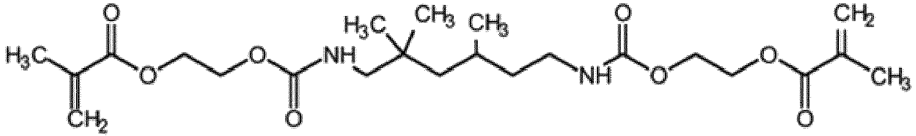

Diese ist im Handel unter der Bezeichnung UDMA (HEMATMDI) bspw. von der Firma Evonik erhältlich und weist eine Viskosität von 0,33 Pas (60°C) auf (Herstellerangabe).

Wie bereits erwähnt, erfolgt eine Coextrusion des Kernmaterials und des Vorläufermaterials der Hülle derart, dass das Vorläufermaterial das Kernmaterial umgibt. Dies wird mit Hilfe einer Düsenkombination aus einer in der Regel ringförmigen Düse und einer zentralen, in der Regel konzentrischen Innendüse erreicht. Das so erhaltene coextrudierte Material wird anschließend durch aktinische Strahlung verfestigt. Die erreichbaren Formen können ineinander übergehen, d. h. je nach Verfahrensführung lassen sich im Wesentlichen sphärische Kapseln, eher tropfen- oder eiförmige Kapseln erzeugen. Ein besonderer Vorteil ist aber, dass erfindungsgemäß Kapseln mit hoher Sphärizität und möglichst monomodaler Größenverteilung erreicht werden können. Hinsichtlich einer möglichst monomodalen Größenverteilung sind typischerweise dmax/dmin-Werte von kleiner 1,1, kleiner 1,05 oder auch im Bereich von 1,01 oder kleiner erreichbar, wobei es sich bei dmax und dmin um die Durchmesser einzelner Partikel aus einem Ensemble von beispielsweise 20 oder 50 Partikeln handelt.

Die mit dem Verfahren hergestellten Kapseln bzw. die Kapseln der vorliegenden Erfindung sind sogenannte Mikrokapseln und liegen in einem Bereich einer mittleren Teilchengröße von bevorzugt 0,1 bis 10 mm, bevorzugt 0,2 bis 8, weiter bevorzugt 0,3 bis 5 mm, ganz besonders bevorzugt im Bereich 1 bis 5 mm. Die daraus resultierende Portionierung des Kernmaterials ist für viele Anwendungen vorteilhaft, da große Mengen bei gleichzeitig guter Durchmischung appliziert werden können. Die mittlere Teilchengröße kann beispielsweise mittels einer Schieblehre bestimmt werden, wobei der Durchmesser von 20 oder mehr, z. B. 50 oder 100 Teilchen, bestimmt und dann der Mittelwert gebildet wird. Bei kleineren Teilchengrößen kann die Teilchengrößenbestimmung auch mittels Licht- oder Rasterelektronenmikroskop bestimmt werden, ebenfalls durch Mittelung von 20 oder mehr, z. B. 50 oder 100 Teilchen. Bei hoher Sphärizität und monomodaler Teilchengrößenverteilung reichen in der Regel 20 Teilchen zur Bestimmung des mittleren Durchmessers aus. In der Regel werden ideal kugelförmige Partikel angestrebt, ovale Formen der Partikel sind aber auch umfasst. Im Fall ovaler, länglicher Partikelformen kann zunächst für jedes Einzelpartikel der Teilchendurchmesser bestimmt werden, indem der der lange und der kurze Durchmesser gemessen werden und der Mittelwert davon als Teilchendurchmesser herangezogen wird. Aus diesen Teilchendurchmessern wird dann wie im Fall runder Partikel der mittlere Teilchendurchmesser berechnet.

Es ist mit dem vorgestellten Verfahren möglich, Kapseln mit im Vergleich zur Kapselgröße dünnen Wandstärken herzustellen. Im Allgemeinen weisen die entsprechend hergestellten Kapseln eine mittlere Wanddicke von 10 µm bis 2 mm, bevorzugt 50 µm bis 200 µm auf. Eine Wandstärke der Kapseln im Bereich von 50 bis 200 µm bietet einen optimalen Kompromiss von Kapseleffizienz und Festigkeit, im erweiterten Bereich sind auch Bereich 10 µm bis 2 mm einstellbar.

Die Einstellung der Wandstärke erfolgt durch die Einstellung des Verhältnisses der Materialströme für das Kern- und Schalenmaterial. Hierzu wird zu Beginn einer Produktionsserie ein Materialstromverhältnis von Kern- zu Schalenmaterial z. B. von 5:1 Gew./Gew. vorgegeben. Bei einem definiertem Außendurchmesser der Kapsel z. B. von 4 mm, der durch die Wahl der Düsengeometrie eingestellt wird, ist damit auch unter Berücksichtigung der Dichte für Kern- und Schalenmaterial die Wandstärke definiert. Die Kontrolle der mittleren Wandstärke einer Kapselcharge erfolgt, indem ein repräsentatives Ensemble von ca. 20 Kernmaterial-gefüllten Kapseln definierter Größe zunächst gewogen, dann zerdrückt, getrocknet und erneut gewogen werden. Über die Dichte von Kern- und Schalenmaterial bei definiertem Außendurchmesser wird die mittlere Wandstärke berechnet. Exemplarisch erfolgt an einzelnen Kapseln der Serie die Kontrolle der Schalendicke und deren Gleichförmigkeit und Defektfreiheit auch mit Hilfe von licht- und rasterelektronenmikroskopischen Aufnahmen der Schalenoberfläche und der Bruchkanten.

Die aus den Abmessungen resultierende Druckfestigkeit (uniaxiale Belastung; Bruchkraft) ist durch die variable Einstellung des Kapseldurchmessers und der Schalendicke abhängig vom Verwendungszweck einstellbar im Bereich von 0,1 N bis 200 N. Dies entspricht den Kategorien Eierschalen-Morphologie bis praktisch (mit der Hand) unzerstörbar. Für Kapseln, bei denen der Kapselinhalt durch Zerdrücken der Schalen zwischen den Fingern erfolgt, ist eine Druckfestigkeit im Bereich von ca. 5 N bis 25 N besonders vorteilhaft. Die Bestimmung der uniaxialen Druckfestigkeit erfolgt dabei mit Hilfe einer Zwick-Universalprüfmaschine anhand von repräsentativen Stichprobenumfängen von 20 Kapseln. Dabei werden die Kapseln zwischen zwei planaren Prüfstempeln aus Edelstahl mit einer Vorlaufgeschwindigkeit von 3 mm/min bis zum totalen Versagen (Bruch) zerdrückt. Die Datenerfassung und Auswertung erfolgt mit einer 100 N-Messdose und der Software testXpert®.

Die Kapselwandstärke ist nicht nur für die Druckfestigkeit, sondern auch für die Wasserdampf-Transmissionsrate eine maßgebliche Größe. Eine Reduktion der Wandstärke reduziert die Druckfestigkeit und damit die zur Freisetzung erforderliche Kraft, erhöht andererseits jedoch die Wasserdampftransmissionsrate. Abhängig vom Einsatzbereich kann hier jeweils ein Kompromiss gefunden werden und ein Abgleich erfolgen.

Wie bereits erwähnt, sind die Kapseln in monomodaler, einheitlicher Größe mit sehr geringem Toleranzbereich herstellbar. Dies ist vorteilhaft für die Erzielung einer gleichförmigen Wandstärke und verhindert ein Unterschreiten eines Mindestwertes als Voraussetzung für Barriereapplikationen und Weiterprozessierung in Vakuumverfahren.

In dem genannten Verfahren kann das rheologische Verhalten des Vorläufermaterials so abgestimmt werden, dass es die Abschnürung und die Ausbildung von möglichst kugelförmigen Kapseln bevorzugt und ein gleichmäßiges Verlaufen auf dem Kernmaterial begünstigt. Bevorzugt beträgt die Viskosität des UV-polymerisierbaren Vorläufermaterials bei der Prozesstemperatur, also beim Extrudieren, 0,001 bis 50 Pa·s, weiter bevorzugt 0,01 bis 10 Pa·s, noch weiter bevorzugt 0,1 bis 1 Pa·s. Die Viskositätswerte beziehen sich also auf die jeweilige beim Extrudieren verwendete Temperatur des Vorläufermaterials. Die Viskositätsmessung erfolgt mit einem Paar-Rheometer MCR 102 nach dem Kegel-Platte-Prinzip mit Kegelabmessungen 60 mm/4° bei einem Messspalt von 150 µm. Zur Abschätzung einer geeigneten Prozesstemperatur kann standardmäßig bei im Drehzahlbereich von 0,1 bis 100 1/s bei 20, 40 und 60°C gemessen werden. Die jeweils gewünschten Viskositäten können über die Temperatur gesteuert bzw. nachjustiert werden, bei der die Verkapselung erfolgt.

Weiterhin können allein nicht-prozessierbare (oder bei einer gegebenen Temperatur nicht-prozessierbare) höher-viskose Vorläufermaterialien auch durch Abmischen mit niedrigviskosen Komponenten, bspw. den weiter unten beschriebenen Tri-, Tetra- oder höherfunktionellen Acrylaten, verarbeitet werden.

Im Hinblick auf die Wasser- oder Wasserdampfundurchlässigkeit der Hüllen der Kapseln ist eine möglichst defektfreie Kapselhülle anzustreben. Um dies zu erreichen, ist es besonders günstig, wenn das Vorläufermaterial keine organischen Lösungsmittel oder sonstigen flüchtigen Bestandteile enthält, da diese beim Herstellungsprozess oder der Lagerung entweichen könnten und so die Hülle schädigen könnten. Mischsysteme (technical grade) mit Verunreinigungen und Anteilen niedrigen Dampfdrucks begünstigen Schalendefekte durch Blasenbildung und sind weniger geeignet. In bevorzugten Ausführungsformen besteht die Zusammensetzung, welche als Hüllmaterial extrudiert wird, bevorzugt aus dem Vorläufermaterial und dem Radikalstarter, in weiteren bevorzugten Ausführungsformen beträgt die Summe aus Vorläufermaterial und Radikalstarter mindestens 98 Gew.-%, idealerweise größer 99 Gew.-% der Zusammensetzung, welche als Hüllmaterial extrudiert wird. In weiteren Ausführungsformen der Erfindung besteht die Zusammensetzung, welche als Hüllmaterial extrudiert wird, aus dem Vorläufermaterial, dem Radikalstarter und aus einem Mittel zur Verbesserung der Grenzflächenkompatibilität.

Das Vorläufermaterial, das mindestens eine Verbindung mit zwei jeweils endständigen Diacrylatgruppen und/oder Dimethacrylatgruppen ist, die durch eine starre Gruppe verbunden sind, kann teilweise durch Tri-, Tetra- oder höherfunktionelle Acrylate ersetzt sein, insbesondere um die Viskosität des Vorläufermaterials einzustellen, wie oben erwähnt. Die vorliegende Erfindung umfasst somit auch Ausführungsformen, bei denen das Di(meth)acrylat-Vorläufermaterial zu bis zu 30 Gew.-%, beispielsweise bis zu 25 Gew.-% oder bis zu 20 Gew.-%, durch derartige Tri-, Tetra- oder höherfunktionelle Acrylate ersetzt ist. Ein Beispiel für ein solches einsetzbares trifunktionelles Acrylat ist Trimethylolpropantriacrylat (TMPTA).

Wie oben ausgeführt wird eine Extrusion in einer Gasatmosphäre, d.h. Luft, Gas, insbesondere Inertgas, durchgeführt, um eine maximale Grenzflächenspannung der Schale gegenüber dem Außenmedium zu erzeugen, so dass eine hinreichend gute, defektfreie und insbesondere sehr glatte Oberfläche als Bedingung für eine "pinhole"-freie Barriere erhalten wird. Als Gase bzw. Inertgase eignen sich neben Luft z. B. Stickstoff oder Edelgase wie Argon. Durch die Tropfenformierung in Luft oder Gasatmosphäre erhält man eine bestmögliche Oberflächenqualität bei geringer Rauigkeit vergleichbar mit der der Substrate für Barrierefolien, wie durch AFM-Aufnahmen gezeigt wurde. Dies ist besonders günstig im Hinblick auf eine optionale Weiterveredelung und Verbesserung der Barriereeigenschaften der Kapseln z. B. durch nachfolgende Metallisierung oder Metalloxid-Beschichtung.

Die Tropfenerzeugung erfolgt schwingungsunterstützt im Frequenzbereich von 20 bis 2000 Hz abhängig von Kapselgröße. Für eine Kapselgröße von 4 mm Durchmesser wird der Frequenzbereich von 40 bis 200 Hz bevorzugt, gleichbedeutend mit einer Kapselmenge von 40 bis 200 Kapseln pro Sekunde oder rd. 150 000 bis 720 000 Kapseln pro Stunde. Dadurch ergibt sich ein hochskalierbarer und kommerzialisierbarer Prozess.

Kurze Belichtungszeiten sind für die Erzeugung von Kapseln mit Barriere-Qualität erwünscht. Durch einen kurzen und hochintensiven Belichtungsimpuls wird die Härtung der Schalen initiiert, die nach der sich anschließenden Dunkelreaktion sehr hohe Konversionsraten der eingesetzten Monomere von bspw. deutlich oberhalb von 90% bewirkt, so dass die Härtungsreaktion beim Auftreffen der Kapseln im Auffangbehälter oder einer Auffangvorrichtung weitestgehend abgeschlossen ist und die Kapseln über eine klebefreie Oberfläche verfügen. Die Belichtungszeit beträgt bevorzugt etwa 0,02 bis 0,2 Sekunden, besonders bevorzugt etwa 0,05 bis 0,1 Sekunden. Daraus resultiert ein maximaler, bisher nicht erreichter oder berichteter Vernetzungsgrad. Die Konversionsrate liegt zum Beispiel im Bereich von 93-95% z. B. für TCDD(M)A, mindestens jedoch 85%.

Die Initiierung der Starterreaktion erfolgt in einem UV-Strahlungsfeld, das aus einem Quecksilberspektrum oder metalldotierten (z. B. Fe) Quecksilbersilberstrahler erhalten wird. Als Strahler können konkret beispielsweise eisendotierte Quecksilberdampf-Strahler verwendet werden, die ein Strahlungsspektrum des D-Typs erzeugen. Dieses ist dadurch charakterisiert, dass es über das kurzwellige Hg-Spektrum hinaus auch einen starken Output im längerwelligen UV- Bereich von 350 bis 400 nm aufweist. Ein einsetzbarer Strahler ist 15 cm lang und emittiert pro cm Länge maximal 200 Watt an Gesamtstrahlungsleistung (IR, Sichtbar, UV). Die Strahlung kann über einen elliptischen Reflektor in einer Brennlinie zusammengeführt werden, die von den Kapseln durchfallen wird. Als geeignete Strahlungsintensitäten können zum Beispiel etwa 140 W pro cm Bogenlänge bzw. ca. 50 bis 140 W/cm² an Flächenintensität insgesamt genannt werden.

Die Zusammensetzung, welche ein UV-polymerisierbares Vorläufermaterial enthält, enthält auch einen Radikalstarter. Als Radikalstarter können handelsübliche, dem Fachmann bekannte UV-Starter wie beispielsweise Benzophenone, Acylphosphinoxide, α-Hydroxyketone o.ä, insbesondere Lucirin® TPO (BASF) oder Irgacure® 184 (Ciba), verwendet werden.

Der Restmonomeranteil der eingesetzten Monomere beträgt nach der Härtung bevorzugt 15 Gew.-% oder kleiner, weiter bevorzugt 2 bis 10 Gew.-%, noch bevorzugter 1 bis 5 Gew.-%. Dies entspricht einer hohen Konversionsrate, d.h. einem hohen Grad an Umsetzung der eingesetzten Monomere und damit einer Minimierung des Restmonomergehaltes in der Schale. Zugleich wird auch die Menge des erforderlichen Radikalstarters reduziert. Dadurch kann die Migration von Restmonomeren und Startermolekülen in das Kernmaterial auch bei längerer Lagerung in den Bereich der Nachweisgrenze gedrückt werden. Dadurch werden neue Qualitäten erreicht, die den Einsatz der Materialien auch im Consumer-Produktbereich ermöglichen. Besonders vorteilhaft ist außerdem, dass durch die hochintensive UV-Bestrahlung das Kernmaterial in-situ sterilisiert und auf diese Weise entkeimt wird. Die Konversionsrate und entsprechend auch der Restmonomergehalt der Schalen kann bspw. mit der Methode der Dynamic Scanning Calorimetry (DSC) auf einfache Weise bestimmt und zur Qualitätssicherung verwendet werden. Hierbei wird eine repräsentative Menge (typischerweise 0,1 g) gehärteter Schalenfragmente in einem Tiegel mit einer Rate von 10 K/min kontinuierlich erhitzt, dadurch die verbliebenen Doppelbindungen zur Reaktion gebracht und durch Auswertung des resultierenden exothermen Signals die verbliebenen Doppelbindungen quantifiziert.

Die Konversionsrate kann entsprechend dem geringen Restmonomergehalt deutlich größer als 85% sein, typischerweise sogar deutlich größer als 90%.

Zur Erzielung der Grenzflächenkompatibilität zwischen dem bevorzugt polaren, wässrig dominierten Kernmaterial und deutlich weniger polaren Schalenmaterial ist die Zugabe eines Prozessadditivs zum Kernmaterial vorgesehen. Als solches Mittel zur Erzielung einer Grenzflächenkompatibilität sind zum Beispiel neutrale Tenside (z. B. Tween 80) oder wasserlösliche Polymere wie Polyethylenoxid mit einem Molekulargewicht im Bereich von etwa 1.000 bis 10.000.000, insbesondere 50.000 bis 3.000.000 oder 100.000 bis 2.000.000, geeignet (z. B. PEO mit Molmasse 1 Mio. oder 2 Mio. Dalton). Das Additiv PEO hat über die grenzflächenaktive Wirkung hinaus den zusätzlichen Vorteil, dass es die Viskosität des Kernmaterials erhöht, dadurch das Schwingungsverhalten des Tropfens reduziert und somit die Kapselformierung im Hinblick auf die Sphärizität begünstigt.

Die Konzentration liegt bevorzugt im Bereich von etwa 0,05 bis 2 Gew.-%, bezogen auf das Kernmaterial. Auch der Zusammensetzung, die das UV-polymerisierbare Vorläufermaterial enthält, kann ein Mittel zur Erzielung einer Grenzflächenkompatibilität zugegeben werden, beispielsweise ein ethoxyliertes Acrylat, bevorzugt ist erfindungsgemäß aber, wenn das Mittel zur Erzielung einer Grenzflächenkompatibilität nur dem Kernmaterial zugegeben wird.

Aufgrund des bei der Härtung erzielbaren hohen Konversionsgrades ist es in Ausführungsformen der Erfindung nicht erforderlich, eine aktive Nachhärtung durchzuführen, optional kann eine solche Nachhärtung, insbesondere UV-Härtung, aber vorteilhaft sein, um den Restmonomeranteil weiter zu verringern. Werden die erzeugten Kapseln beispielsweise im Auffangbehälter nicht vom Streulicht des Strahlers abgeschirmt, erfolgt eine automatische Nachvernetzung, ohne dass weitere Maßnahmen ergriffen werden müssen.

Die Kapselwände der erfindungsgemäßen oder erfindungsgemäß hergestellten Kapseln verfügen bereits unmodifiziert über Barriereeigenschaften bis in den mittleren Bereich bei Schalendicken im Bereich von 150 µm. Man erhält damit Wasserdampf-Transmissionsraten (Water Vapour Transmission Rate WVTR) im Bereich von 1 bis 10 g/m²d bei Standard-Messbedingungen (23°C, 80% r.F.-Differenz). Die Wasserdampf-Transmissionsrate kann mit einer vorgegebenen Anzahl von Partikeln, typischerweise 20 Partikeln, mit bekannter Wandstärke (z. B. etwa 150 µm einfache Wandstärke), die sich in einer Umgebung mit einer relativen Luftfeuchtigkeit von 20% befinden, bestimmt werden. Dabei wird über eine vorgegebene Zeitspanne, z. B. 2 Wochen, der Gewichtsverlust gravimetrisch verfolgt. Der hohe Vernetzungsgrad ist eine wesentliche Voraussetzung für bzw. begünstigt die Barriere-Eigenschaft der Kapsel.

Die geringe WVTR der unmodifizierten Kapseln ist eine Voraussetzung für eine Weiterveredelung/Verbesserung der Kapseln in den Bereich der Hoch- und Ultrahochbarriere, da sie die Einstellung der für die Vakuum-Verfahren erforderlichen Prozessbedingungen ermöglicht. Die erfindungsgemäßen bzw. erfindungsgemäß hergestellten Kapseln sind Vakuum-fest, d.h. mechanisch hinreichend stabil und hinreichend dicht gegenüber Wasserdampf, so dass sie in Vakuum-Verfahren ohne Beschädigungen der Schale weiter prozessiert und auf diese Weise auch noch weiter veredelt werden können. Zu diesen Verfahren zählen die standardmäßig eingesetzten Verfahren der Barrierefolientechnologie wie Vakuum-Beschichtung durch Bedampfen, Sputtern, Plasmaverfahren u.a. Die Kapseln erlauben aufgrund ihrer Stabilität und Undurchlässigkeit auch eine chemische und/oder galvanische Metallisierung.

Die hinsichtlich des Verfahrens beschriebenen vorteilhaften Ausführungsformen gelten mutatis mutandis ausdrücklich auch für die erfindungsgemäßen oder erfindungsgemäß herstellbaren Kapseln. Demgemäß weisen die Kapseln beispielsweise bevorzugt eine WVTR (gemessen bei 23°C und einer relativen Luftfeuchtigkeitsdifferenz von 80%) von 0,005 bis 50 g/m²d, insbesondere 0,1 bis 10 g/m²d oder 1 bis 10 g/m²d, auf.

Die erfindungsgemäßen oder erfindungsgemäß hergestellten Kapseln weisen aufgrund der Materialwahl und auch des hohen Vernetzungsgrads eine sprödbrechende Schale auf, sodass das Wasser enthaltende Kernmaterial durch mechanische Einwirkung, beispielsweise eine Druckbeanspruchung (bspw. Stoßbelastung) und/oder Scherbeanspruchung, freisetzbar ist.

In Fällen, in denen auf Druck eine Freisetzung des Kernmaterials aus der mindestens einen Kapsel des erfindungsgemäßen Filterelements erfolgen soll, kann die Wandstärke der Kapsel beispielsweise in einem Verhältnis von einfacher Wandstärke zu Kapseldurchmesser von bspw. 1:50 bis 1:120 liegen.

### Figuren:

- Fig. 1: zeigt schematisch den technischen Ablauf eines Verfahrens zur Herstellung von geeigneten Kapseln für das erfindungsgemäße Filterelement.
- Fig. 2: zeigt eine schematische Darstellung eines erfindungsgemäßen Filterelements für die Verwendung in einem Tabakartikel.
- Fig. 3: zeigt eine erste Ausführungsform eines erfindungsgemäßen Tabakartikels mit einem erfindungsgemäßen Filterelement.
- Fig. 4: zeigt eine zweite Ausführungsform eines erfindungsgemäßen Tabakartikels mit einem erfindungsgemäßen Filterelement.
- Fig. 5: zeigt eine dritte Ausführungsform eines erfindungsgemäßen Tabakartikels mit einem erfindungsgemäßen Filterelement.

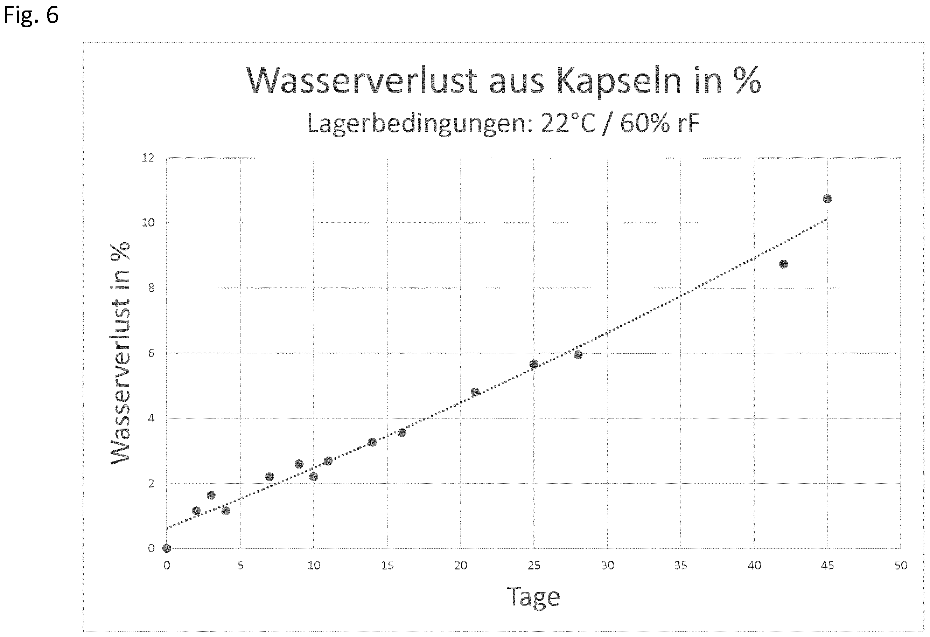

- Fig. 6: zeigt die Ergebnisse einer Untersuchung zur Lagerfähigkeit der nach dem beschriebenen Verfahren hergestellten Kapseln.

### Beispiele:

### Herstellung einer Kapsel mit einem flüssigen Medium als Kernmaterial für die Verwendung in einem erfindungsgemäßen Filterelement

Nachfolgend ist das erfindungsgemäße Herstellungsverfahren für wasser(dampf)-undurchlässige Kapseln ausführlicher beschrieben sowie deren Verwendung in einem erfindungsgemäßen Filterelement bzw. Tabakartikel.

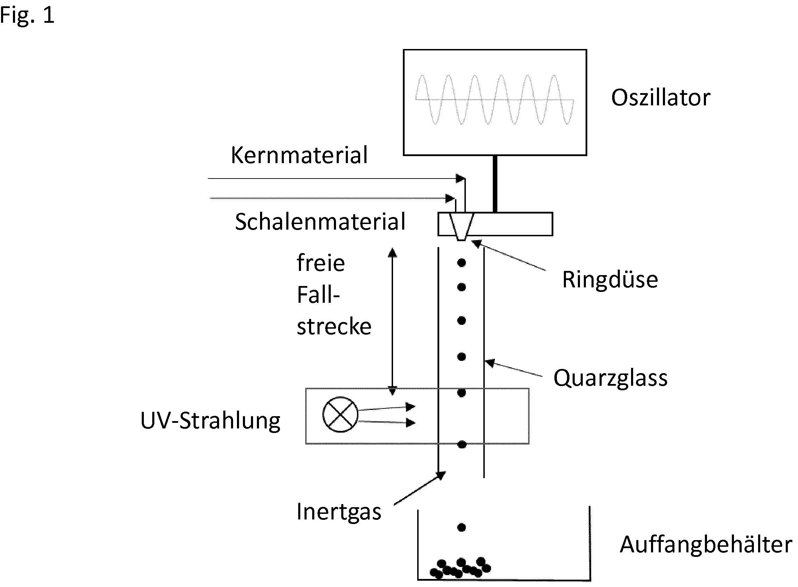

Der technische Ablauf der Vernetzungsreaktion (Härtungsreaktion) ist in Fig. 1 beispielhaft dargestellt. Die Erzeugung der Kapseln erfolgt mittels einer Ringdüse mit vorzugsweise konzentrischer Innendüse, wie bereits voranstehend erwähnt. Das zu kapselnde, Wasser und Additiv enthaltende Kernmaterial sowie die Zusammensetzung, welche das Vorläufermaterial für das Verkapselungsmaterial und den Radikalstarter enthält, werden separat mit Hilfe einer geeigneten Fördereinrichtung (z. B. mittels Pumpen oder durch Druckbeaufschlagung) aus den Vorlagebehältern in die Düsenkonstruktion geführt. Der Durchmesser der Außendüse ist nicht spezifisch beschränkt; er liegt typischerweise im Bereich von ca. 5 mm bis 0,1 mm, kann aber zur Erzielung noch kleinerer Kapseln noch eine Größenordnung kleiner sein. Der Durchmesser der Innendüse ist harmonisch auf den Außendurchmesser abgestimmt, liegt demnach also beispielsweise bei 2:3. Die Feineinstellung der Wandstärken der Kapseln wird jedoch vor allem auch durch andere Parameter als diejenigen der Düsengeometrie bestimmt, z. B. durch die gewählten Förderdrücke, die in günstiger Weise im Bereich von 0,1 bis 5 bar Überdruck im Vergleich zum Umgebungsdruck liegen können. Es ist bevorzugt, dass die Vorlagebehälter und Düse separat temperierbar sind. Dadurch können ggf. relativ höherviskose Harze als Hüllmaterial in den gewünschten Viskositätsbereich überführt werden, ohne dass es (aufgrund der kurzzeitigen Temperaturbelastung) zur Schädigung oder zu unerwünschten Nebeneffekten kommt. Bei geeigneter Abstimmung der Prozessparameter (z. B. einer Temperatur im Bereich von etwa 5 bis 50°C und/oder einer Förderrate von ca. 10⁴ cm³/min bis ca. 10 cm³/min für das Harz und/oder den Inhaltsstoff - je nach gewünschter Größe/Dicke der Kapseln und gewünschter Relation von verkapseltem Material zur Wandstärke) können Kugeln, bestehend aus dem Hüllmaterial mit dem Kernmaterial im Innenbereich, erzeugt werden. Der Durchmesser der Kugeln liegt bevorzugt im Bereich von 0,1 bis 10 mm, weiter bevorzugt 1 bis 5 mm. Die Einstellung eines Verhältnisses Wandstärke zu Kapseldurchmesser von 1:100 ist erfindungsgemäß grundsätzlich möglich. So können stabile Kapseln von z. B. 4 mm Durchmesser mit Wandstärken von 40 µm hergestellt werden.

Die Kapseln aus dem mit der Vorläufermaterialzusammensetzung umhüllten Kernmaterial werden bevorzugt nicht in eine Flüssigkeit extrudiert, sondern bewegen sich nach dem Verlassen der Düse in der Regel im freien Fall auf eine Härtungszone zu, werden also unter dem Eindruck der Erdanziehungskraft beschleunigt. Je größer der Abstand zwischen Düse und Härtungszone ist, desto schneller durchfallen sie die Härtungszone und umso kürzer ist also die Verweilzeit. Der Abstand sollte so gewählt werden, dass einzelne Kapseln gebildet werden: Diese verlassen meist erst in Tropfenform die Düse und benötigen eine gewisse Zeit, die gewünschte (idealerweise sphärische) Geometrie auszubilden. Dem muss die Geometrie der Vorrichtung Rechnung tragen, weil sonst Kapseln mit ungleicher Schalendicke entstehen, die im ungünstigsten Fall Defekte aufweisen. Als günstiger Kompromiss hat sich ein Abstand im Bereich von 10 bis 50 cm erwiesen. Innerhalb dieser Fallstrecke können optional ein oder mehrere Blenden (insbesondere Irisblenden) angebracht sein, um die Düse vor Streulicht aus der Härtungszone zu schützen.

Die Kontaktzeit der Inhaltstoffe mit dem Vorläufermaterial vor der Härtung beträgt in der Regel insgesamt nur eine kurze Zeitspanne (z. B. Sekundenbruchteile, insbesondere 0,1 bis 0,5 sec.), so dass die Gefahr einer Kontamination der Inhaltstoffe durch Herauslösen von Schalenbestandteilen minimiert ist.

Bei der Härtungszone handelt es sich um einen Bereich hoher Strahlungsintensität, die durch kommerziell erhältliche Strahler wie UV-Strahler der Firmen Hoenle oder Fusion bereitgestellt werden kann. Die Länge der Zone ist prinzipiell nicht festgelegt; in günstiger Weise beträgt sie 15-60 cm. Die Tröpfchenbildung erfolgt üblicherweise schwingungsinduziert mit Hilfe einer Vibrationsvorrichtung. Ein elektrostatisches Hochspannungsfeld zwischen der Ringdüse und einer Gegenelektrode unter dem Auffangbehälter kann vorgesehen sein, um das Abreißen der Tropfen zu unterstützen.

Die Verweildauer der Kapseln in der Härtungszone beträgt abhängig von der Länge der Härtungszone und dem Abstand Düse-Härtungszone erfindungsgemäß zwischen etwa 0,05 bis 0,2 Sekunden, bevorzugt etwa 0,05 bis 0,1 Sekunden. Insbesondere ergibt sich bei einer Härtungszonenlänge, insbesondere einer Strahlerlänge von 15 cm und einem Abstand Düse-Strahler (der vorzugsweise ca. 10-30 cm beträgt) von ca. 20 cm eine Verweilzeit von ca. 0,06 Sekunden als typische Verweilzeit. Falls eine Inhibierung durch Luftsauerstoff beobachtet wird, kann das Strahlungsfeld optional mit Inertgas gespült werden. Bei besonders dicken Schalen können die Kapseln zur völligen Durchhärtung im Bedarfsfall durch Platzierung des Auffangbehälters im Streulichtbereich des Strahlers auch noch nachgehärtet werden.

Die Härtung erfolgt wie erwähnt mit Hilfe aktinischer Strahlung. Dadurch wird thermische Belastung der Inhaltsstoffe weitgehend vermieden (kalte Härtung).

Erfolgt die Kapselformierung ohne aktive Tropfenabscherung, erfolgt also die Kapselablösung von der Düse nur unter dem Eindruck der Gewichtskraft der Tropfen, so wird die Tropfengröße primär durch die Oberflächen- und Grenzflächeneigenschaften des Inhaltsstoffes und des Kapselmaterials bestimmt und nur in untergeordnetem Maße durch die Düsengeometrie. Durch Zugabe der Oberflächen- und Grenzflächenspannung reduzierenden Substanzen (z. B. Tensiden) erhält man Kapseln typischerweise von 0,5 bis 5 mm Durchmesser. Optional kann die Abscherung und damit der Abriss der Tröpfchen zur Erzielung kleinerer Durchmesser oder zur Erreichung eines höheren Durchsatzes durch spezielle Düsengestaltung, einen gerichteten Gasstrom, durch Schwingungen (Vibrationen), elektrostatische Felder oder andere in Fachkreisen bekannte Mechanismen unterstützt werden. Im Falle des sogenannten laminaren Strahlzerfalls, bei dem die Tropfenbildung schwingungsunterstützt erfolgt, ergibt sich die Kapselgeometrie unmittelbar aus den Düsenabmessungen.

Als Upscaling-Prinzip ist die Parallelisierung des Verfahrens mit Hilfe von Vielfach-Düsen ein geeignetes Mittel.

Abhängig davon, ob im Einzel- oder Parallelbetrieb gearbeitet wird, ist das Strahlungsfeld unterschiedlich auszuleuchten. Im Falle eines Einzel- oder Monomodalbetriebes ist es günstig, mit Hilfe eines Ellipsoid-Reflektors oder dgl. die Strahlungsintensität in einer Brennlinie zu bündeln, durch die die Kapseln fallen. Im Falle eines Multimodalbetriebes kann eine parabolische Reflektorgeometrie vorteilhaft sein, die für eine gleichförmige Ausleuchtung des Strahlungsfeldes sorgt.

### Anwendungsbeispiel 1:

Herstellung von Kapseln mit 4mm Durchmesser auf Basis von Sartomer® SR 833 S (Arkema) (Tricyclodecandimethanoldiacrylat)
Vorbereitung Kernmaterial: 0,5 g PEO (2 Mio) wurden in 100 ml zuvor (zur Entfernung des gelösten Sauerstoffs) abgekochtem und demineralisiertem Wasser bei 30°C unter Rühren gelöst.
Vorbereitung Schale: 0,25 g Lucirin® TPO wurden in 25 g SR 833 S eingerührt und bei 50°C unter Lichtabschirmung und Argon-Atmosphäre gelöst.

Beide Materialien wurden in die entsprechenden Vorlagengefäße für Kern- und Schale gefüllt. Beide Behälter wurden auf 25°C temperiert.

Die Fallstrecke wurde mit Argon als Inertgas geflutet. Der UV-Strahler wurde auf 60% der Maximalleistung entsprechend 84 W/cm Strahlungsintensität eingestellt. Die Frequenz des Schwingungsgenerators wurde auf 60 Hz eingestellt. Förderdrucke wurden auf 100 mbar (Kern) und 400 mbar (Schale) gestellt und die Extrusion durch eine konzentrischen Düsenkonfiguration bestehend aus Ringdüse (mit 3,1 mm Durchmesser) mit konzentrischer Hohlnadel (2,2 mm-Bohrung) wurde begonnen. Die Kontrolle der Tropfenbildung erfolgte durch ein Stroboskop. Härtung der sich bildenden Kapseln im freien Fall und Auffangen der Kapseln in Behälter (Becherglas). Es resultierten Kapseln von einheitlicher Größe (4 mm Außendurchmesser) und einer mittleren Schalendicke von rd. 145 µm. Die Kapseln verweilten für ca. 5 Minuten im Streulicht des Strahlers und erfuhren hierdurch noch eine Nachhärtung.

Die Bestimmung der Permeation (Wasser(dampf)durchlässigkeit) erfolgte gravimetrisch anhand des Gewichtsverlusts einer Kapselprobe bestehend aus 20 Kapseln über die Zeit bei Lagerung bei 23°C und 20 % rel. Feuchte. Durch die Verfolgung des Gewichtsverlustes über einen Zeitraum von 2 Wochen wurde eine Wasserdampf-Permeation von 2,7 g/m²d für eine Schalendicke von 150 µm erhalten.
Aus DSC-Messungen wurde eine Konversionsrate von 93% bestimmt.

### Anwendungsbeispiel 2:

Herstellung von Kapseln mit 4mm Durchmesser auf Basis von Sartomer® SR 833 S mit reduzierter Wandstärke

Vorbereitung Kernmaterial: 0,6 g TWEEN 80 wurden in 100 ml zuvor abgekochtem demineralisiertem Wasser gelöst.
Vorbereitung Schale: 0,4 g lrgacure® 184 wurden in 20 g SR 833 S eingerührt und bei 50°C unter Lichtabschirmung und Argon-Atmosphäre gelöst. Die beiden Materialien wurden in die Vorlagengefäße für Kern- und Schale gefüllt. Beide Behälter wurden auf 25°C temperiert.

Die Fallstrecke wurde mit Argon als Inertgas geflutet. Der UV-Strahler wurde auf 70% der Maximalleistung entsprechend 98 W/cm Strahlungsintensität eingestellt. Die Frequenz des Schwingungsgenerators wurde auf 60 Hz eingestellt. Die Förderdrucke wurden auf 50 mbar (Kern) und 400 mbar (Schale) gestellt und die Extrusion durch eine konzentrische Düsenkonfiguration bestehend aus Ringdüse (mit 3,1 mm Durchmesser) mit konzentrischer Hohlnadel (2,2 mm-Bohrung) wurde begonnen. Die Kontrolle der Tropfenbildung erfolgte durch ein Stroboskop. Die Härtung der sich bildenden Kapseln erfolgte im freien Fall und die Kapseln wurden in einem Behälter (Becherglas) aufgefangen. Es resultierten Kapseln von einheitlicher Größe (4 mm Außendurchmesser) und einer mittleren Schalendicke von rd. 120 µm. Nachhärtung im Streulicht.

### Anwendungsbeispiel 3:

Herstellung von Kapseln mit reduziertem Durchmesser (2,4 mm) auf Basis des Schalenmaterials bestehend aus der Kombination UDMA:TMPTA (Trimethylolpropantriacrlat) = 3:1 mit zu Beispiel 2 vergleichbarer Schalendicke.

Vorbereitung Kernmaterial: 0,5 g PEO (2 Mio) wurde in 100 ml Wasser gelöst.
Vorbereitung Schale: 0,4 g Lucirin® TPO wurde in 33 g der Acrylatkombination UDMA:TMPTA = 3:1 eingerührt und bei 50°C unter Lichtabschirmung gelöst. Die beiden Materialien wurden in die Vorlagengefäße für Kern- und Schale gefüllt. Der Vorlagenbehälter für das Schalenmaterial sowie die Düse wurden auf 50°C und der Behälter für Kernmaterial auf 25°C eingestellt.

Die Fallstrecke wurde mit Argon als Inertgas geflutet. Der UV-Strahler wurde auf 60% der Maximalleistung entsprechend 84 W/cm Strahlungsintensität eingestellt. Die Frequenz des Schwingungsgenerators wurde auf 90 Hz eingestellt. Die Förderdrucke wurden auf 200 mbar (Kern) und 4300 mbar (Schale) gestellt und die Extrusion durch eine konzentrischen Düsenkonfiguration bestehend aus Ringdüse (mit 1,75 mm Durchmesser) mit konzentrischer Hohlnadel (1,1 mm-Bohrung) wurde begonnen. Die Kontrolle der Tropfenbildung erfolgte durch ein Stroboskop. Härtung der sich bildenden Kapseln im freien Fall und Auffangen der Kapseln in Behälter (Becherglas). Es resultierten Kapseln von einheitlicher Größe (2,4 mm Außendurchmesser) und einer mittleren Schalendicke von rd. 110 µm.

### Untersuchung zur Lagerfähigkeit der nach dem beschriebenen Verfahren hergestellten Kapseln:

In der Untersuchung wurde eine bekannte Anzahl an Kapseln in einer Klimakammer mit definierten Klima (22 °C, 60% rel. Feuchte) gelagert. Durch regelmäßig durchgeführte Wiegungen wurde der Gewichtsverlust über die Zeit ermittelt. Einzig mögliche Ursache für den Gewichtsverlust ist das verdampfen von Wasser. Das Gewicht der Kapselschale wurde in der Auswertung berücksichtigt.

Eine Umrechnung der Verluste in WVTR ergibt einen Wert von 1,06 g/m²/Tag.

Der Beobachtungszeitraum betrug 42 Tage.

Es konnte gezeigt werden, dass die erfindungsgemäßen Kapseln sich durch einen besonders niedrigen Wasserverlust auszeichnen. So betrug der Wasserverlust nach 42 Tagen weniger als 10 Gewichts-% bezogen auf das ursprüngliche Gesamtgewicht der gefüllten Kapsel zu Beginn des Experiments.

### Beispielhafte Ausführungsformen des erfindungsgemäßen Filterelements bzw. der erfindungsgemäßen Tabakartikel:

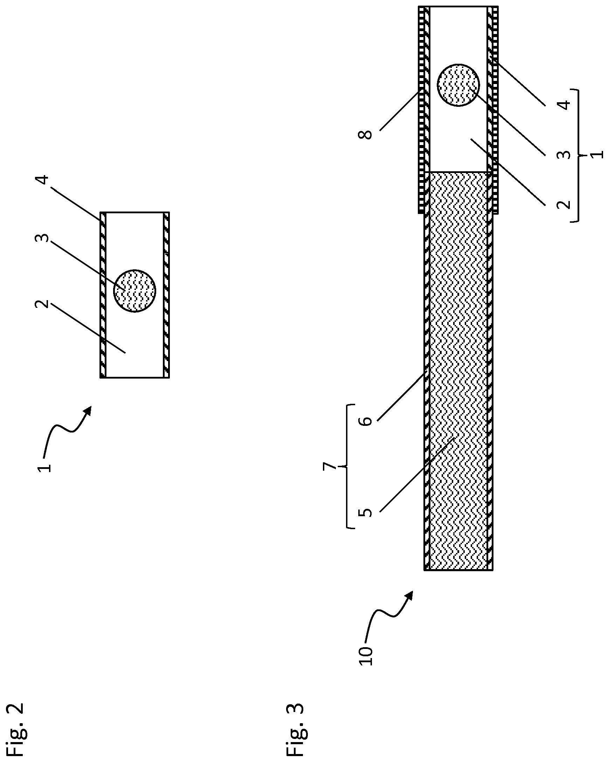

In Fig. 2 ist eine Ausführungsform eines erfindungsgemäßen Filterelements 1 dargestellt. Das Filterelement 1 umfasst einen Filterkörper 2 und eine in dem Filterkörper 2 eingebettete Kapsel 3, die mit einem flüssigen Medium als Kernmaterial gefüllt ist. Die Kombination aus Filterkörper 2 und Kapsel 3 ist von einem Hüllmaterial 4 umgeben, welches den äußeren Rand des Filterelements 1 definiert.

In Fig. 3 ist eine erste Ausführungsform des erfindungsgemäßen Tabakartikels 10 dargestellt, wobei der Tabakartikel 10 das erfindungsgemäße Filterelement 1 gemäß Fig. 2 aufweist. Der Tabakartikel umfasst ein Tabak-haltiges, stabförmiges Element 7, welches ein Tabak-haltiges Material 5 umfasst, dass von einem Hüllmaterial 6 umgeben ist. Das Tabak-haltige, stabförmige Element 7 ist mit dem Filterelement 1 durch ein Halteelement 8 verbunden, wobei das Halteelement 8 (als sog. "tipping paper") aus Papier oder Papierhaltigem Material gefertigt ist. Das Halteelement 8 verbindet das Tabak-haltige, stabförmige Element 7 mit einem Filterelement 1, wie es in Fig. 2 dargestellt ist, und sorgt dafür, dass diese beiden Bestandteile in ihrer räumlichen Anordnung zueinander verbleiben.

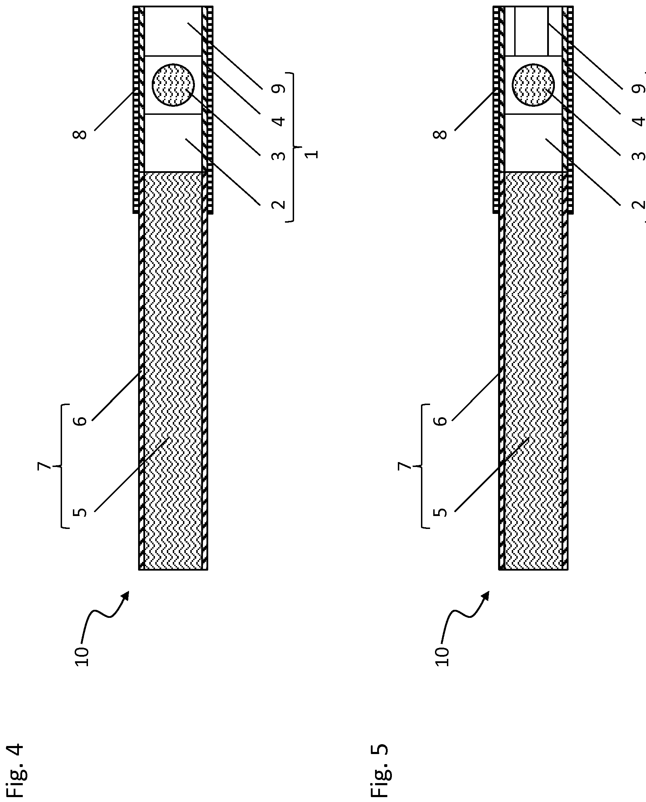

In Fig. 4 ist eine zweite Ausführungsform eines erfindungsgemäßen Tabakartikels 10 gezeigt, wobei sich der Tabakartikel 10 aus Fig. 4 von dem Tabakartikel aus Fig. 3 lediglich durch die Ausführungsform des erfindungsgemäßen Filterelements 1 unterscheidet. Im Gegensatz zu dem Filterelement 1 des Tabakartikels 10 aus Fig. 3, ist die Kapsel in dem Filterelement 1 des Tabakartikels 10 aus Fig. 4 nicht in dem mindestens einen Filterkörper 2 eingebettet sondern ist zwischen den beiden Filterkörpern 2 und 9 angeordnet.

In Fig. 5 ist eine dritte Ausführungsform eines erfindungsgemäßen Tabakartikels 10 gezeigt, wobei sich der Tabakartikel 10 aus Fig. 5 von dem Tabakartikel aus Fig. 4 lediglich durch die Ausführungsform des erfindungsgemäßen Filterelements 1 unterscheidet. Im Gegensatz zu dem Filterelement 1 des Tabakartikels 10 aus Fig. 4, weist der Filterkörper 9 eine hohle Aussparung auf. Damit weist der Tabakartikel 10 gemäß Fig. 5 an der Mundseite des Filterelements 1 eine Aussparung auf und es handelt sich somit um einen Tabakartikel 10 mit einem sog. "recess filter".

## Patentansprüche

1. Filterelement (1) für die Verwendung in einem Tabakartikel, wobei das Filterelement (1) mindestens einen Filterkörper (2) und mindestens eine Kapsel (3) mit einem flüssigen Medium als Kernmaterial aufweist,
**dadurch gekennzeichnet, dass**
die mindestens eine Kapsel (3) eine wasserdampfundurchlässige Hülle aus einem polymeren Material aufweist, welches aus einem UV-polymerisierbaren Vorläufermaterial erhalten wurde, wobei das UV-polymerisierbare Vorläufermaterial mindestens eine Verbindung mit zwei jeweils endständigen Diacrylat- und/oder Dimethacrylatgruppen ist, die durch eine starre, unpolare, nicht-vernetzende Gruppe verbunden sind, wobei die Kapseln eine mittlere Teilchengröße von 0,1 bis 10 mm aufweisen, bevorzugt 1 bis 5 mm, und eine mittlere Wanddicke von 10 µm bis 2 mm, bevorzugt 50 µm bis 200 µm.

2. Filterelement (1) nach Anspruch 1, wobei die mindestens eine Kapsel (3) eine WVTR (gemessen bei 23°C und einer relativen Luftfeuchtigkeit von 80%) von 0,005 bis 50 g/m²d, insbesondere 0,1 bis 10 g/m²d aufweist.

3. Filterelement (1) nach einem der Ansprüche 1 oder 2, wobei das flüssige Medium des Kernmaterials durch mechanische Beanspruchung freisetzbar ist.

4. Filterelement (1) nach einem der vorhergehenden Ansprüche, wobei die starre Gruppe des UV-polymerisierbare Vorläufermaterials mindestens eine Verbindung umfasst oder davon abgeleitet ist, die aus der Gruppe ausgewählt ist, bestehend aus:
a. aliphatischen bicyclischen oder tricyclischen Ringdiolsystemen, welche durch Alkylgruppen mit 1 bis 3 Kohlenstoffatomen substituiert sein können,
b. Bisphenol A oder Derivaten davon, bei denen einer oder beide Phenylreste durch Alkylgruppen mit 1 bis 3 Kohlenstoffatomen substituiert sind, und
c. Diurethanen, welche aus einem verzweigten C₅ bis C₁₀-Alkyldiisocyanat oder C₅ bis C₁₀-Cycloalkyldiisocyanat und Monoethylenglycol gebildet sind.

5. Filterelement (1) nach einem der vorhergehenden Ansprüche, wobei das UV-polymerisierbare Vorläufermaterial ausgewählt ist aus Bisphenol-A-Diacrylat, Bisphenol-A-Dimethacrylat, Tricyclodecandimethanoldiacrylat, Tricyclodecandimethanoldimethacrylat und/oder Urethandimethacrylat (UDMA) der folgenden Formel, wobei es sich in der Regel um ein Isomerengemisch handelt:

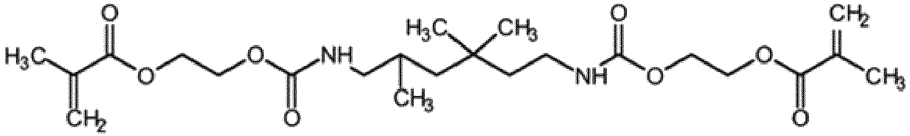

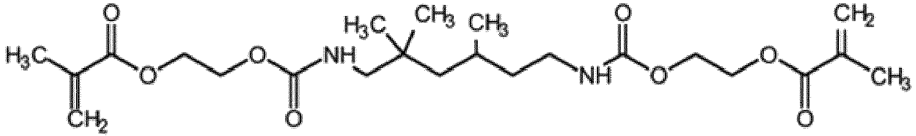

6. Filterelement (1) nach einem der vorhergehenden Ansprüche, wobei die Viskosität des UV-polymerisierbaren Vorläufermaterials 0,001 bis 50 Pa·s, bevorzugt 0,1 bis 10 Pa·s, beträgt.

7. Filterelement (1) nach einem der vorhergehenden Ansprüche, wobei das UV-polymerisierbare Vorläufermaterial kein Lösungsmittel und keine bei Raumtemperatur und Atmosphärendruck leicht flüchtigen Substanzen enthält.

8. Filterelement (1) nach einem der vorhergehenden Ansprüche, wobei das flüssige Medium ein hydrophiles flüssiges Medium ist, bevorzugt eine wässrige Lösung oder Dispersion ist, besonders bevorzugt Wasser ist.

9. Filterelement (1) nach einem der vorhergehenden Ansprüche, wobei die Kapsel (3) herstellbar ist durch ein Verfahren mit den Schritten:
- Co-extrudieren des Kernmaterials und einer Zusammensetzung, welche ein UV-polymerisierbares Vorläufermaterial der Hülle und einen Radikalstarter enthält, derart, dass das UV-polymerisierbare Vorläufermaterial Tröpfchen des Wasser enthaltenden Kernmaterials umgibt, um ein co-extrudiertes Material zu erhalten, und
- anschließend Führen des co-extrudierten Materials durch eine Härtungszone, bei der es sich um einen mit Luft, einem anderen Gas, oder insbesondere Inertgas, gefüllten Bereich handelt, worin eine Polymerisation und Vernetzung des Vorläufermaterials der Hülle durch aktinische Strahlung bewirkt wird und die Verweildauer des co-extrudierten Materials in dieser Härtungszone 0,02 bis 0,2 Sekunden beträgt,
wobei das UV-polymerisierbare Vorläufermaterial mindestens eine Verbindung mit zwei jeweils endständigen Diacrylatgruppen und/oder Dimethacrylatgruppen ist, die durch eine starre Gruppe verbunden sind, und
wobei das Kernmaterial ein Mittel zur Erzielung einer Grenzflächenkompatibilität zwischen dem Kernmaterial und der Hülle enthält.

10. Filterelement (1) nach Anspruch 9, wobei die Verweildauer des co-extrudierten Materials in der Härtungszone 0,05 bis 0,1 Sekunden beträgt.

11. Filterelement (1) nach einem der Ansprüche 9 oder 10, wobei die Intensität der aktinischen Strahlung so gewählt wird, dass der Restmonomeranteil der eingesetzten Monomere nach der Härtung 15 Gew.-% oder kleiner ist, bevorzugt 2 bis 10 Gew.-%, noch bevorzugter 1 bis 5 Gew.-%.

12. Filterelement (1) nach einem der Ansprüche 9, 10 oder 11, wobei eine durch aktinische Strahlung induzierte Nachhärtung durchgeführt wird.

13. Filterelement (1) nach einem der Ansprüche 9, 10, 11 oder 12, wobei das grenzflächenaktive Mittel aus nichtionischen Tensiden und Polyalkylenoxiden, insbesondere Polyethylenoxiden mit einer Molmasse von 100.000 bis 3.000.000 Dalton, und Kombinationen davon ausgewählt ist.

14. Filterelement (1) nach einem der vorhergehenden Ansprüche, wobei das flüssige Medium des Kernmaterials Salze, Salzhydrate, Kohlenhydrate, Proteine, Vitamine, Aminosäuren, Nukleinsäuren, Lipide, Medikamente, Verdickungsmittel, Emulgatoren, Tenside, Farbstoffe, Zellmaterial, Aromastoffe, Duftstoffe oder andere Wirkstoffe enthält.

15. Filterelement (1) nach einem der vorhergehenden Ansprüche, wobei die Kapsel (3) auf der Außenseite eine zusätzliche Beschichtung aufweist, bevorzugt wird die Beschichtung mittels Vakuumverfahren wie Sputtern, Bedampfen oder Plasmaverfahren, oder mittels chemischer oder galvanischer Beschichtung aufgebracht, um beschichtete Kapseln zu erhalten.

16. Filterelement (1) nach einem der vorhergehenden Ansprüche, wobei die Kapsel (3) in dem mindestens einen Filterelement (2) eingebettet vorliegt.

17. Filterelement (1) nach einem der Ansprüche 1 bis 15, wobei die Kapsel (3) neben dem mindestens einen Filterkörper (2) angeordnet ist.

18. Filterelement (1) nach einem der vorhergehenden Ansprüche, wobei das Filterelement (1) mehr als einen Filterkörper (2, 9) aufweist, bevorzugt ist die Kapsel (3) zwischen zwei benachbarten Filterkörpern (2, 9) angeordnet.

19. Filterelement (1) nach einem der vorhergehenden Ansprüche, wobei das Filterelement (1) mindestens einen Filterkörper (2, 9) aufweist, der in Längsrichtung eine oder mehrere hohle Aussparungen aufweist.

20. Filterelement (1) nach einem der vorhergehenden Ansprüche, wobei die mindestens eine Kapsel (3) eine Druckfestigkeit im Bereich von 5 N bis 25 N aufweist.

21. Filterelement (1) nach einem der vorhergehenden Ansprüche, wobei der mindestens eine Filterkörper (2, 9) und die mindestens eine Kapsel (3) von einem Hüllmaterial (4) umgeben sind, bevorzugt ist das Hüllmaterial (4) Papier oder Pappe.

22. Tabakartikel (10) enthaltend ein tabakhaltiges, stabförmiges Element (7) und ein in axialer Richtung dazu angeordnetes Filterelement (1) gemäß einem der Ansprüche 1 bis 21.

## Claims

1. A filter element (1) for use in a tobacco product, the filter element (1) comprising at least one filter body (2) and at least one capsule (3) having a liquid medium as a core material,
**characterized in that**
the at least one capsule (3) comprises a steam-impermeable shell that is made of a polymer material and was obtained from a UV-polymerizable precursor material, the UV-polymerizable precursor material being at least one compound having two diacrylate and/or dimethylacrylate groups bonded by a rigid, non-polar, non-crosslinking group, the capsules having an average particle size of from 0.1 to 10 mm, preferably from 1 to 5 mm, and an average wall thickness of from 10 µm to 2 mm, preferably from 50 µm to 200 µm.

2. The filter element (1) according to Claim 1, wherein the at least one capsule (3) has a WVTR (measured at 23°C and relative humidity of 80%) of from 0.005 to 50 g/m²d, in particular from 0.1 to 10 g/m²d.

3. The filter element (1) according to either of Claims 1 or 2, wherein the liquid medium of the core material can be released by mechanical loading.

4. The filter element (1) according to any one of the preceding Claims, wherein the rigid group of the UV-polymerizable precursor material comprises, or is derived from, at least one compound selected from the group consisting of:
a. aliphatic bicyclic or tricyclic ring diol systems that may be substituted by alkyl groups having 1 to 3 carbon atoms,
b. bisphenol A or derivatives thereof in which one or both phenyl functional groups are substituted by alkyl groups having 1 to 3 carbon atoms, and
c. diurethanes formed from a branched C₅ to C₁₀ alkyl diisocyanate or C₅ to C₁₀ cycloalkyl diisocyanate and monoethylene glycol.

5. The filter element (1) according to any one of the preceding Claims, wherein the UV-polymerizable precursor material is selected from bisphenol A diacrylate, bisphenol A dimethacrylate, tricyclodecane dimethanol diacrylate, tricyclodecane dimethanol dimethacrylate and/or urethane dimethacrylate (UDMA) of the following formula, typically in an isomer mixture:

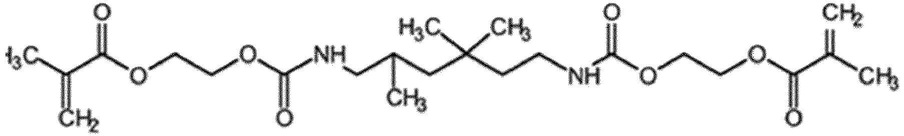

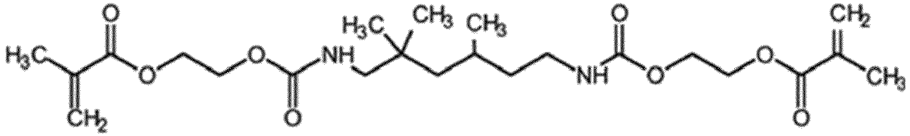

6. The filter element (1) according to any one of the preceding Claims, wherein the viscosity of the UV-polymerizable precursor material is from 0.001 to 50 Pa s, preferably from 0.1 to 10 Pa·s.

7. The filter element (1) according to any one of the preceding Claims, wherein the UV-polymerizable precursor material does not contain a solvent or any substances that are highly volatile at room temperature and atmospheric pressure.

8. The filter element (1) according to any one of the preceding Claims, wherein the liquid medium is a hydrophilic liquid medium, preferably an aqueous solution or dispersion, particularly preferably water.

9. The filter element (1) according to any one of the preceding Claims, wherein the capsule (3) can be produced by a method comprising the steps of:
- co-extruding the core material and a composition containing a UV-polymerizable precursor material of the shell and a radical initiator such that the UV-polymerizable precursor material surrounds droplets of the water-containing core material, in order to obtain a co-extruded material, and
- subsequently guiding the co-extruded material through a curing zone, which is a region filled with air, another gas or in particular inert gas, wherein polymerization and crosslinking of the precursor material of the shell are caused by actinic radiation and the length of stay of the co-extruded material in the curing zone is from 0.02 to 0.2 seconds, wherein the UV-polymerizable precursor material is at least one compound having two terminal diacrylate and/or dimethylacrylate groups bonded by a rigid group, and
wherein the core material contains a means for achieving interface compatibility between the core material and the shell.

10. The filter element (1) according to Claim 9, wherein the length of stay of the co-extruded material in the curing zone is from 0.05 to 0.1 seconds.

11. The filter element (1) according to either of Claims 9 or 10, wherein the intensity of the actinic radiation is selected such that following the curing, the remaining monomer proportion of the used monomers is 15 wt.% or less, preferably from 2 to 10 wt.%, more preferably from 1 to 5 wt.%.

12. The filter element (1) according to any of Claims 9, 10 or 11, wherein additional curing induced by actinic radiation is carried out.

13. The filter element (1) according to any of Claims 9, 10, 11 or 12, wherein the interface-active means is selected from non-ionic surfactants and polyalkylene oxides, in particular polyethylene oxides having a molar mass of from 100,000 to 3,000,000 dalton, and combinations thereof.

14. The filter element (1) according to any one of the preceding Claims, wherein the liquid medium of the core material contains salts, salt hydrates, carbohydrates, proteins, vitamins, amino acids, nucleic acids, lipids, medicines, thickeners, emulsifiers, surfactants, dyes, cellular material, flavorings, fragrances or other active ingredients.

15. The filter element (1) according to any one of the preceding Claims, wherein the capsule (3) comprises an additional coating on the outside, the coating preferably being applied by means of vacuum processes such as sputtering, vapor deposition or plasma processes, or by means of chemical or galvanic coating in order to obtain coated capsules.

16. The filter element (1) according to any one of the preceding Claims, wherein the capsule (3) is embedded in the at least one filter element (2).

17. The filter element (1) according to any one of Claims 1 to 15, wherein the capsule (3) is located adjacent to the at least one filter body (2).

18. The filter element (1) according to any one of the preceding Claims, wherein the filter element (1) comprises more than one filter body (2, 9), the capsule (3) preferably being located between two adjacent filter bodies (2, 9).

19. The filter element (1) according to any one of the preceding Claims, wherein the filter element (1) comprises at least one filter body (2, 9) that comprises one or more hollow recesses in the longitudinal direction.

20. The filter element (1) according to any one of the preceding Claims, wherein the at least one capsule (3) has a compressive strength in the range of from 5 N to 25 N.

21. The filter element (1) according to any one of the preceding Claims, wherein the at least one filter body (2, 9) and the at least one capsule (3) are surrounded by a sleeve material (4), the sleeve material (4) preferably being paper or paperboard.

22. A tobacco product (10) containing a tobacco-containing, rod-shaped element (7) and a filter element (1), according to any one of Claims 1 to 21, that is mounted in the axial direction in relation thereto.

## Revendications

1. Élément filtrant (1) destiné à une utilisation dans un article de tabac, l'élément filtrant (1) comprenant au moins un corps filtrant (2) et au moins une capsule (3) contenant un milieu liquide en tant que matériau de noyau,
**caractérisé en ce que**
ladite au moins une capsule (3) comprend une enveloppe imperméable à la vapeur d'eau en un matériau polymère, qui a été obtenue à partir d'un matériau précurseur polymérisable par UV, le matériau précurseur polymérisable par UV étant au moins un composé contenant deux groupes diacrylate et/ou diméthacrylate chacun terminaux, qui sont reliés par un groupe apolaire rigide non réticulant, les capsules présentant une taille de particule moyenne de 0,1 à 10 mm, de préférence de 1 à 5 mm, et une épaisseur de paroi moyenne de 10 µm à 2 mm, de préférence de 50 µm à 200 µm.

2. Élément filtrant (1) selon la revendication 1, dans lequel ladite au moins une capsule (3) présente un WVTR (mesuré à 23 °C et à une humidité relative de l'air de 80 %) de 0,005 à 50 g/m²j, notamment de 0,1 à 10 g/m²j.

3. Élément filtrant (1) selon l'une quelconque des revendications 1 ou 2, dans lequel le milieu liquide du matériau de noyau peut être libéré par sollicitation mécanique.

4. Élément filtrant (1) selon l'une quelconque des revendications précédentes, dans lequel le groupe rigide du matériau précurseur polymérisable par UV comprend au moins un composé ou est dérivé d'au moins un composé, qui est choisi dans le groupe constitué par :
a. les systèmes de diols cycliques bicycliques ou tricycliques aliphatiques, qui peuvent être substitués par des groupes alkyle de 1 à 3 atomes de carbone,
b. le bisphénol A ou des dérivés de celui-ci, dans lesquels un ou les deux radicaux phényle sont substitués par des groupes alkyle de 1 à 3 atomes de carbone, et
c. les diuréthanes, qui sont formés à partir d'un diisocyanate d'alkyle en C₅ à C₁₀ ou diisocyanate de cycloalkyle en C₅ à C₁₀ ramifié, et de monoéthylène glycol.

5. Élément filtrant (1) selon l'une quelconque des revendications précédentes, dans lequel le matériau précurseur polymérisable par UV est choisi parmi le diacrylate de bisphénol A, le diméthacrylate de bisphénol A, le diacrylate de tricyclodécane-diméthanol, le diméthacrylate de tricyclodécane-diméthanol et/ou le diméthacrylate d'uréthane (UDMA) de la formule suivante, celui-ci consistant généralement en un mélange d'isomères :

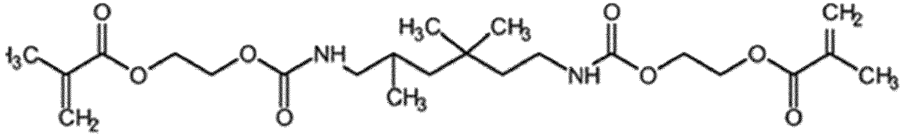

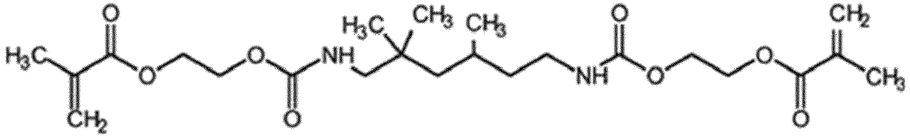

6. Élément filtrant (1) selon l'une quelconque des revendications précédentes, dans lequel la viscosité du matériau précurseur polymérisable par UV est de 0,001 à 50 Pa·s, de préférence de 0,1 à 10 Pa·s.

7. Élément filtrant (1) selon l'une quelconque des revendications précédentes, dans lequel le matériau précurseur polymérisable par UV ne contient pas de solvant et pas de substances volatiles à température ambiante et pression atmosphérique.

8. Élément filtrant (1) selon l'une quelconque des revendications précédentes, dans lequel le milieu liquide est un milieu liquide hydrophile, de préférence une solution ou dispersion aqueuse, de manière particulièrement préférée l'eau.

9. Élément filtrant (1) selon l'une quelconque des revendications précédentes, dans lequel la capsule (3) peut être fabriquée par un procédé comprenant les étapes suivantes :
- la coextrusion du matériau de noyau et d'une composition qui contient un matériau précurseur polymérisable par UV de l'enveloppe et un démarreur radicalaire, de telle sorte que le matériau précurseur polymérisable par UV entoure des gouttelettes du matériau de noyau contenant de l'eau, afin d'obtenir un matériau coextrudé, puis
- l'acheminement du matériau coextrudé au travers d'une zone de durcissement, qui consiste en une zone remplie avec de l'air, un autre gaz ou notamment un gaz inerte, dans laquelle une polymérisation et une réticulation du matériau précurseur de l'enveloppe sont réalisées par un rayonnement actinique, la durée de séjour du matériau coextrudé dans cette zone de durcissement étant de 0,02 à 0,2 seconde,
le matériau précurseur polymérisable par UV étant au moins un composé contenant deux groupes diacrylate et/ou groupes diméthacrylate chacun terminaux, qui sont reliés par un groupe rigide, et
le matériau de noyau contenant un moyen destiné à obtenir une compatibilité d'interface entre le matériau de noyau et l'enveloppe.

10. Élément filtrant (1) selon la revendication 9, dans lequel la durée de séjour du matériau coextrudé dans la zone de durcissement est de 0,05 à 0,1 seconde.

11. Élément filtrant (1) selon l'une quelconque des revendications 9 ou 10, dans lequel l'intensité du rayonnement actinique est choisie de telle sorte que la proportion de monomères résiduelle des monomères utilisés après le durcissement soit de 15 % en poids ou moins, de préférence de 2 à 10 % en poids, de manière encore davantage préférée de 1 à 5 % en poids.

12. Élément filtrant (1) selon l'une quelconque des revendications 9, 10 ou 11, dans lequel un durcissement secondaire induit par un rayonnement actinique est réalisé.

13. Élément filtrant (1) selon l'une quelconque des revendications 9, 10, 11 ou 12, dans lequel l'agent actif à l'interface est choisi parmi les tensioactifs non ioniques et les polyoxydes d'alkylène, notamment les polyoxydes d'éthylène ayant une masse molaire de 100 000 à 3 000 000 Dalton, et leurs combinaisons.

14. Élément filtrant (1) selon l'une quelconque des revendications précédentes, dans lequel le milieu liquide du matériau de noyau contient des sels, des hydrates de sels, des glucides, des protéines, des vitamines, des acides aminés, des acides nucléiques, des lipides, des médicaments, des épaississants, des émulsifiants, des tensioactifs, des colorants, des matériaux cellulaires, des arômes, des parfums ou d'autres agents actifs.

15. Élément filtrant (1) selon l'une quelconque des revendications précédentes, dans lequel la capsule (3) comprend un revêtement supplémentaire sur le côté extérieur, le revêtement étant de préférence appliqué par un procédé sous vide tel qu'une pulvérisation, une évaporation ou un procédé plasma, ou par revêtement chimique ou galvanique, afin d'obtenir des capsules revêtues.

16. Élément filtrant (1) selon l'une quelconque des revendications précédentes, dans lequel la capsule (3) se présente sous forme incorporée dans ledit au moins un élément filtrant (2).

17. Élément filtrant (1) selon l'une quelconque des revendications 1 à 15, dans lequel la capsule (3) est agencée à côté dudit au moins un corps filtrant (2).

18. Élément filtrant (1) selon l'une quelconque des revendications précédentes, dans lequel l'élément filtrant (1) comprend plus d'un corps filtrant (2, 9), la capsule (3) étant de préférence agencée entre deux corps filtrants voisins (2, 9).

19. Élément filtrant (1) selon l'une quelconque des revendications précédentes, dans lequel l'élément filtrant (1) comprend au moins un corps filtrant (2, 9), qui comprend un ou plusieurs évidements creux dans la direction longitudinale.

20. Élément filtrant (1) selon l'une quelconque des revendications précédentes, dans lequel ladite au moins une capsule (3) présente une résistance à la pression dans la plage allant de 5 N à 25 N.

21. Élément filtrant (1) selon l'une quelconque des revendications précédentes, dans lequel ledit au moins un corps filtrant (2, 9) et ladite au moins une capsule (3) sont entourés par un matériau d'enveloppe (4), le matériau d'enveloppe (4) étant de préférence du papier ou du carton.

22. Article de tabac (10) contenant un élément en forme de barre contenant du tabac (7) et un élément filtrant (1) selon l'une quelconque des revendications 1 à 21 agencé dans la direction axiale par rapport à celui-ci.
